# EUROPEAN PATENT APPLICATION

(11) **EP 2 175 241 A2**
(43) Date of publication of application: **14.04.2010**
(21) Application number: 09166883.0
(22) Date of filing: 30.07.2009
(51) Int. Cl.: G01C 21/36

(54) **Device for selecting area to be introduced and method thereof**

(30) Priority: 03.09.2008 JP 2008226442
(71) Applicant: FUJITSU LIMITED, Kawasaki-shi, Kanagawa 211-8588 (JP)
(72) Inventor: Miyata, Ryosuke, Kawasaki-shi, Kanagawa 211-8588 (JP); Okuyama, Kyouko, Kawasaki-shi, Kanagawa 211-8588 (JP); Yamada, Hiroshi, Kawasaki-shi, Kanagawa 211-8588 (JP)
(74) Representative: Fenlon, Christine Lesley

(57) **Abstract**

A device selects an area to be introduced, from among a plurality of areas. The area is introduced to a user moving along a given route. The device includes a candidate selector, a time estimator, and an area determiner. The candidate selector selects a candidate area for an area to be introduced. The candidate area is adjacent to or neighboring a road on the given route. The time estimator estimates a transit time for transiting the candidate area. The area determiner determines the candidate area as an area to be introduced, in accordance with the transit time and a given reference time.

## Description

### FIELD

The embodiments discussed herein are related to a device for selecting an area to be introduced from among a plurality of areas.

### BACKGROUND

Recently, introduction to facilities such as restaurants and clothing stores have been provided via, for example, cellular phones or car navigation devices (for example, refer to Japanese Laid-open Patent Publication No. 2003-122655, Japanese Laid-open Patent Publication No. 2002-92785, and Japanese Laid-open Patent Publication No. 2001-99663). Map data includes not only location data that indicates coordinates (the latitude and longitude) of, for example, restaurants and clothing stores but also information such as opening hours.

However, recently, the number of pieces of information on facilities has rapidly increased, and thus a problem exists in that information on an appropriate facility may not be provided to a user. In particular, when a large number of facilities exist and when a large number of pieces of information on the facilities are displayed on a display screen, a problem exists in that the visibility is impaired. The increase of the number of pieces of information on facilities makes it harder for a user to get information on an appropriate facility, and displaying many pieces of information on facilities makes visibility worse.

### SUMMARY

It is preferable to provide a device which is capable of selecting an area appropriate to be introduced to a user from among a great number of facilities in accordance with a situation of the user's travel.

According to an embodiment of the present invention, there is provided a device for selecting an area to be introduced, from among a plurality of areas. The area is introduced to a user moving along a given route. The device includes a candidate selector, a time estimator, and an area determiner.

The candidate selector selects a candidate area for an area to be introduced. The candidate area is adjacent to or neighboring a road on the given route.
The time estimator estimates a transit time for transiting the candidate area.
The area determiner determines the candidate area as an area to be introduced, in accordance with the transit time and a given reference time.

### BRIEF DESCRIPTION OF DRAWINGS

FIG. 1 is a diagram illustrating an example of a system for selecting an area to be introduced according to embodiments of the present invention;
FIG. 2 is a block diagram illustrating an example of a hardware configuration of a cellular phone according to a first embodiment of the present invention;
FIG. 3 is a block diagram illustrating an example of a hardware configuration of a server computer according to a first embodiment of the present invention;
FIG. 4 is a diagram illustrating an example of data configuration of an area data DB according to a first embodiment of the present invention;
FIGs. 5A and 5B are diagrams each illustrating an example of details of an area;
FIG. 6 is a diagram illustrating an example of data configuration of a coefficient table according to a first embodiment of the present invention;
FIG. 7 is a diagram illustrating an example of a screen image of a displayed area according to a first embodiment of the present invention;
FIGs. 8 and 9 are operation charts illustrating an operation flow of an example of a process for selecting a candidate area according to a first embodiment of the present invention;
FIGs. 10 to 13 are operation charts illustrating an operation flow of an example of a process for determining a candidate area as an area to be introduced according to a first embodiment of the present invention;
FIG. 14 is a diagram illustrating an example of details of an area;
FIG. 15 is a block diagram illustrating an example of a hardware configuration of a cellular phone according to a second embodiment of the present invention;
FIGs. 16 and 17 are operation charts illustrating an operation flow of an example of a process for selecting an auxiliary candidate area according to a second embodiment of the present invention;
FIGs. 18 and 19 are operation charts illustrating an operation flow of an example of a process for determining an auxiliary candidate area as an area to be introduced according to a second embodiment of the present invention;
FIG. 20 is a diagram illustrating an example of a screen image of a displayed area according to a second embodiment of the present invention;
FIG. 21 is a block diagram illustrating an example of a hardware configuration of a server computer according to a third embodiment of the present invention;
FIG. 22 is a diagram illustrating an example of data configuration of a rating value DB according to a third embodiment of the present invention;
FIG. 23 is a block diagram illustrating an example of a hardware configuration of a cellular phone according to a third embodiment of the present invention;
FIG. 24 is a diagram illustrating an example of data configuration of a point table according to a third embodiment of the present invention;
FIGs. 25 to 27 are operation charts illustrating an operation flow of an example of a process for determining a candidate area and an auxiliary candidate area as an area to be introduced according to a third embodiment of the present invention;
FIG. 28 is a block diagram illustrating an example of a hardware configuration of a cellular phone according to a fourth embodiment of the present invention;
FIG. 29 is a diagram illustrating an example of data configuration of a distance file according to a fourth embodiment of the present invention;
FIG. 30 is an operation chart illustrating an operation flow of an example of a process for deleting an area to be introduced according to a fourth embodiment of the present invention;
FIG. 31 is a block diagram illustrating an example of a hardware configuration of a cellular phone according to a fifth embodiment of the present invention;
FIG. 32 is a diagram illustrating an example of data configuration of a time table according to a fifth embodiment of the present invention;
FIGs. 33 and 34 are operation charts illustrating an operation flow of an example of a process for determining a candidate area and an auxiliary candidate area as an area to be introduced according to a fifth embodiment of the present invention;
FIGs. 35 to 37 are operation charts illustrating an operation flow of an example of a process for determining an auxiliary candidate area as an area to be introduced according to a sixth embodiment of the present invention;
FIG. 38 is a diagram illustrating an example of a screen image of a displayed area according to a sixth embodiment of the present invention;
FIG. 39 is a block diagram illustrating an example of a hardware configuration of a cellular phone according to a seventh embodiment of the present invention;
FIGs. 40A and 40B are diagrams each illustrating another situation of an area;
FIG. 41 is a diagram illustrating other situations of areas; and
FIG. 42 is a diagram illustrating an example of a system configuration of a device for selecting an area to be introduced according to an embodiment of the present invention.

### DESCRIPTION OF EMBODIMENTS

Embodiments of the present invention will be described with reference to the drawings. A device for selecting an area to be introduced according to embodiments of the present invention selects, from among a plurality of areas, an area to be introduced to a user moving along a given route. The device selects a candidate area for an area to be introduced, estimates a time (referred to as a transit time) for transiting the candidate area, and determines the candidate area as an area to be introduced when the transit time satisfies a given condition. Thus the device may provide a moving user an introduction to an appropriate area.

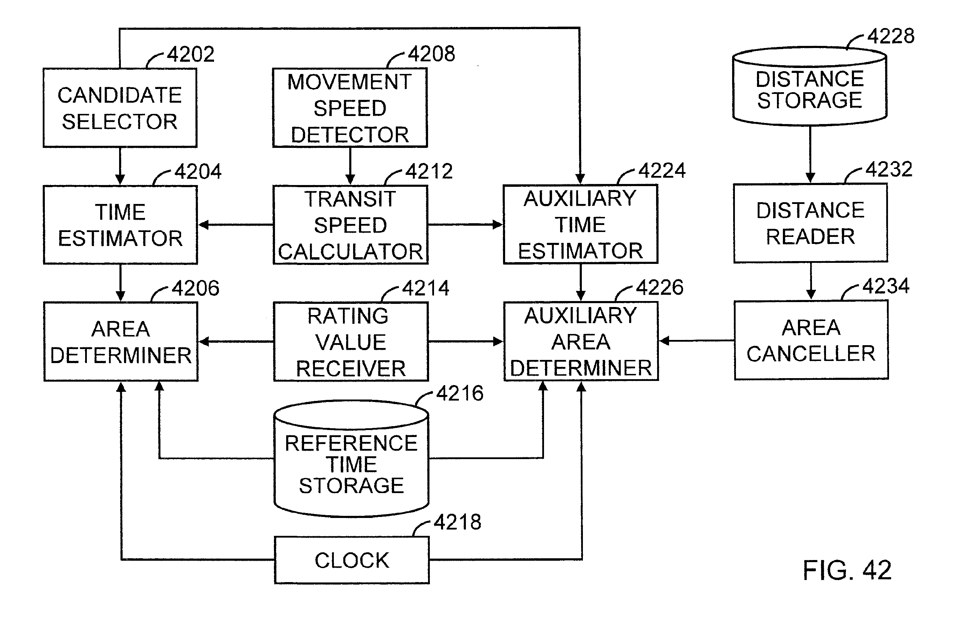

FIG. 42 is a diagram illustrating an example of a system configuration of a device for selecting an area to be introduced according to an embodiment of the present invention. The device for selecting an area to be introduced illustrated in FIG. 42 includes a candidate selector 4202, a time estimator 4204, an area determiner 4206, a movement speed detector 4208, a transit speed calculator 4212, a rating value receiver 4214, a reference time storage 4216, a clock 4218, an auxiliary time estimator 4224, an auxiliary area determiner 4226, a distance storage 4228, a distance reader 4232, and an area canceller 4234.

The candidate selector 4202 selects a candidate area adjacent to or neighboring, that is, lying within a short distance from, a road on the given route.
The time estimator 4204 estimates the transit time for transiting the candidate area by dividing a span of the road involved with the candidate area by a transit speed for the road.
The area determiner 4206 determines the candidate area as an area to be introduced when the transit time falls within a given reference time stored in the reference time storage 4216. The determination of the candidate area as an area to be introduced may also depend on whether a rating value for the candidate area, received by the rating value receiver 4214, satisfies a given condition.

The movement speed detector 4208 detects a movement speed of the user.
The transit speed calculator 4212 calculates the transit speed in accordance with an average value of the movement speeds detected at given timings during a given time period. The calculation of the transit speed may also depend on an attribute of the road such as a road type.

The reference time storage 4216 stores a reference time for each time range. The clock 4218 outputs time data of current time. The area determiner 4206 determines the candidate area as an area to be introduced, in accordance with the transit time and a reference time which has been read from the reference time storage 4216 in accordance with the time data output from the clock 4218.
The reference time storage 4216 may store a reference time for each attribute value of the candidate area. The area determiner 4206 may determine the candidate area as an area to be introduced, in accordance with the transit time and a reference time which has been read from the reference time storage 4216 in accordance with the attribute value of the candidate area.

The candidate selector 4202 includes an auxiliary candidate selector for selecting an auxiliary candidate area a part of which lies within a given distance from the road on the given route.
The auxiliary time estimator 4224 estimates a transit time for transiting the auxiliary candidate area by dividing a span of a back road involved with the auxiliary candidate area by a transit speed for the back road.
The auxiliary area determiner 4226 determines the auxiliary candidate area as an area to be introduced, when the transit time estimated by the auxiliary time estimator 4224 falls within a given auxiliary reference time. The determination of the auxiliary candidate area as an area to be introduced may also depend on whether a rating value for the auxiliary candidate area, received by the rating value receiver 4214, satisfies a given condition.

The auxiliary area determiner 4226 may determine the auxiliary candidate area as an area to be introduced, also in accordance with a cost for transiting the auxiliary candidate area.
The auxiliary area determiner 4226 determines the auxiliary candidate area as an area to be introduced, in accordance with the transit time and a reference time which has been read from the reference time storage 4216 in accordance with the time data output from the clock 4218.
The auxiliary area determiner 4226 may determine the auxiliary candidate area as an area to be introduced, in accordance with the transit time and a reference time which has been read, in accordance with the attribute value of the auxiliary candidate area, from the reference time storage 4216 storing a reference time for each attribute value of the auxiliary candidate area.

The distance storage 4228 stores distance data in association with each transit speed and the distance reader 4232 reads, from the distance storage, the distance data associated with a value of the transit speed for the back road. The area canceller 4234 cancels the area to be introduced, when a distance between the area to be introduced and the road on the given route exceeds the read distance.

In each embodiment discussed below, functions of each variation of the device for selecting an area to be introduced illustrated in FIG. 42 are implemented on a cellular phone as an example.

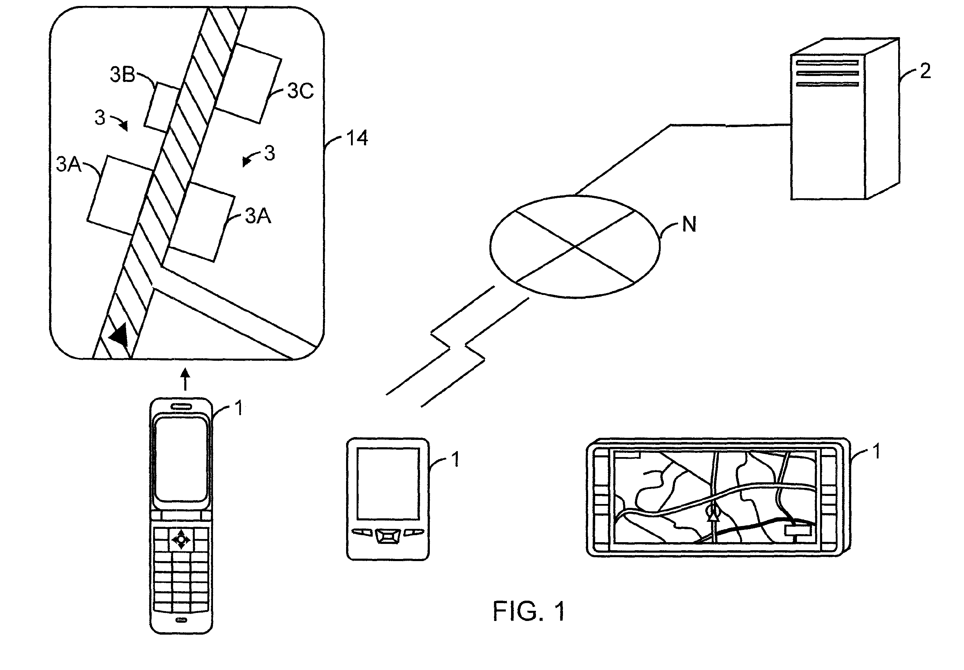

FIG. 1 is a diagram illustrating an example of a system for selecting an area to be introduced according to embodiments of the present invention. The system for selecting an area to be introduced includes a device 1 for selecting an area to be introduced, a communication network N, and an information processor 2. Examples of the device 1 for selecting an area to be introduced include a navigation device installed in a mobile object such as a vehicle, a ship, or a motorcycle, a portable navigation device that may be removed from, e.g., a vehicle, and a mobile terminal. Examples of the mobile terminal include a notebook personal computer, a cellular phone, a game machine, a Personal Digital Assistant (PDA), a smart phone, and a music player. In the embodiments, the discussion will be given on an example in which a cellular phone is used as the device 1 for selecting an area to be introduced. In the following discussion, the device 1 for selecting an area to be introduced is referred to as a cellular phone 1.

The cellular phone 1 is connected to the information processor 2 via the communication network N including, for example, the Internet and a telephone network. The information processor 2 is, for example, a Web server computer (hereinafter also referred to simply as a server computer) and sends and receives information to and from the cellular phone 1 according to a protocol such as the HyperText Transfer Protocol (HTTP). The cellular phone 1 is provided with a Global Positioning System (GPS) receiver and a program for navigation, as discussed later, and displays a map and a navigation route on a display unit 14.

In the embodiments, it is assumed that the server computer 2 performs route search in response to a request from the cellular phone 1 so as to reduce the processing load and storage capacity of the cellular phone 1. It is further assumed that the server computer 2 has a map database (DB) that stores data on areas, which includes facilities data and road data. Alternatively, the cellular phone 1 may have the map DB and perform all of the processes including route search. When a car navigation device, for example, instead of the cellular phone 1 is used as the device 1 for selecting an area to be introduced, the car navigation device may store the map DB in a hard disk or a large-capacity flash memory and perform all of the processes.

### First Embodiment

The cellular phone 1 displays a map on the display unit 14 and draws a route to a destination on the map. A hatched part illustrated in FIG. 1 indicates a road on the route to be traveled. The cellular phone 1 displays, on the display unit 14, areas 3A, 3B, and 3C (generically referred to as an area 3 in some cases), that are areas adjacent to the hatched road or neighboring the hatched road, that is, lie apart from the hatched road within a short distance. In the first embodiment, the areas 3A, 3B, and 3C involved with the hatched road are assumed to, but not limited to, be adjacent to the hatched road for the sake of simplicity. The areas 3A, 3B, and 3C involved with the hatched road may lie apart from the hatched road within a given distance longer than the short distance, as discussed later in a second embodiment. The size of the area 3 including a plurality of facilities such as restaurants varies from small to large with the number of facilities, the scale, and the dimensions, for example. The areas 3A and 3C are large, and the area 3B is smaller than these areas in the example illustrated in FIG. 1. The area 3 includes an area which is adjacent to both of the left and right sides of the road like the area 3A, and an area which is adjacent to one of the left and right sides of the road like the areas 3B and 3C. The shape of the area 3 includes various shapes such as a rectangle, a square, a circle, an ellipse, or a polygon. In the first embodiment, it is assumed that the area 3 is rectangle-shaped or square-shaped for the sake of simplicity.

The cellular phone 1 estimates (or calculates) transit time necessary to transit the area 3 in accordance with transit speed at which the road adjacent to the area 3 is traveled and the span of the road involved with the area 3. The transit time varies with speed at which the cellular phone 1 moves and the size of the area 3. The area 3 is determined as an area to be introduced, in accordance with the transit time and given reference time. When the reference time is defined as a range from one minute to ten minutes, and if the transit time falls within the range, the area 3 is determined as an area to be introduced. Thus, the area 3 having an appropriate size is determined as an area to be introduced. The appropriate size varies depending on the movement environment of the user of the cellular phone 1. For example, when the user carrying the cellular phone 1 is riding in a vehicle that moves at high speed, the areas 3A and 3C are determined as areas to be introduced.

In contrast, since the area 3B is a smaller area that is traveled in a short time, the area 3B is not determined as an area to be introduced. When the user of the cellular phone 1 is walking, the area 3B is determined as an area to be introduced. In contrast, since the areas 3A and 3C are too large to move through the facilities on foot, the areas 3A and 3C are not determined as areas to be introduced. During travelling on the road, an introduction to the area 3 determined as an area to be introduced is provided on the display unit 14 at appropriate timing. The details will be discussed below.

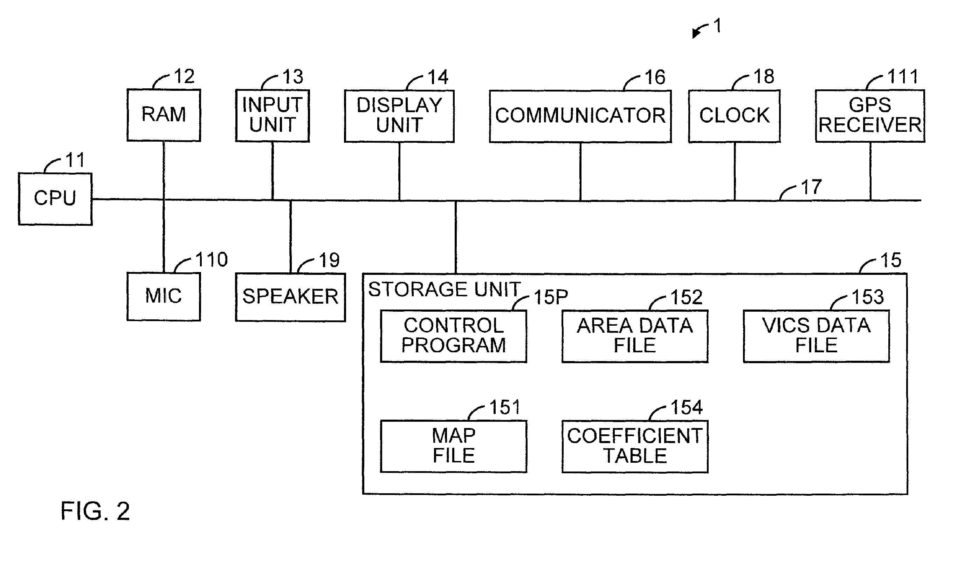

FIG. 2 is a block diagram illustrating an example of a hardware configuration of a cellular phone according to a first embodiment of the present invention. The cellular phone 1 includes a central processing unit (CPU) 11 as a control unit, a random access memory (RAM) 12, an input unit 13, a display unit 14, a storage unit 15, a communicator 16, and a clock 18, a speaker 19, a microphone (MIC) 110, and a GPS receiver 111. The CPU 11 is connected to the hardware components of the cellular phone 1 via a bus 17 to control the hardware components and performs various types of software functions in accordance with a control program 15P stored in the storage unit 15. Although not illustrated, the storage unit 15 also stores operating software (OS), a browser, and the like.

The display unit 14 includes, for example, a liquid crystal display or an organic Electro-Luminescence (EL) display and displays various types of information such as the map, the route, and the area 3. The input unit 13 includes, for example, a push button. The input unit 13 may be laminated on the display unit 14 as in a touch panel. An example in which a touch panel is employed will be discussed below. The speaker 19 amplifies electrical signal corresponding to audio data for introducing the area 3 and outputs sound. The microphone 110 converts sound input from the outside to electrical signal. The electrical signal obtained by the conversion are converted into digital data by an analog/digital (A/D) converter (not illustrated) to be output to the CPU 11. The communicator 16 includes a high-frequency send/receive unit, an antenna, and the like and sends and receives various types of data such as map data to and from the server computer (Web server computer) 2.

The clock 18 outputs time data to the CPU 11. The GPS receiver 111 receives radio waves from an artificial satellite (a GPS satellite) and measures the current location and current direction of the cellular phone 1. Data on the measured current location includes data on the coordinates (the latitude and longitude) and altitude of the cellular phone 1. The GPS receiver 111 outputs data on the current location and the current direction to the CPU 11. The CPU 11 performs, in accordance with the control program 15P stored in the storage unit 15, a sequence of operations related to route navigation, such as drawing map on the display unit 14 in accordance with map data received via the communicator 16 and displaying the current location of the cellular phone 1 on the display unit 14. The control program 15P is programmed so as to also cause the CPU 11 to execute operations discussed below. The storage unit 15 also stores a map file 151, an area data file 152, a Vehicle Information and Communication System (VICS, a registered trademark) data file 153, and a coefficient table 154. The contents of these files will be discussed later.

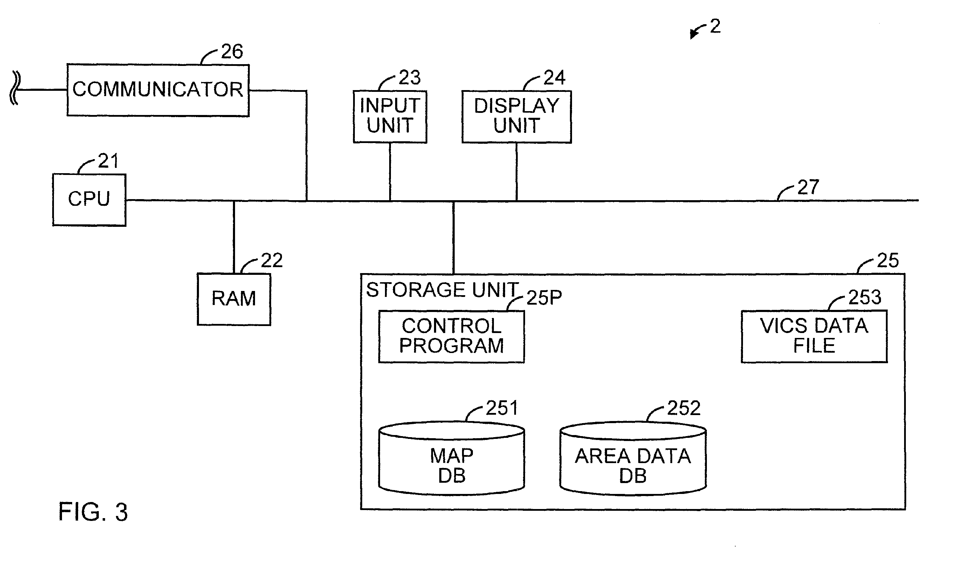

FIG. 3 is a block diagram illustrating an example of a hardware configuration of a server computer according to a first embodiment of the present invention. The server computer 2 includes a CPU 21 as a control unit, a RAM 22, an input unit 23, a display unit 24, a communicator 26, and a storage unit 25. The CPU 21 is connected to the hardware components of the server computer 2 via a bus 27 to control the hardware components and performs various types of software functions in accordance with a control program 25P stored in the storage unit 25. The display unit 24 includes, for example, a liquid crystal display or an organic EL display and displays information in accordance with an instruction from the CPU 21. The input unit 23 includes, for example, a keyboard and a mouse, and operation information input from the input unit 23 is output to the CPU 21.

The communicator 26 is, for example, a gateway functioning as a firewall and sends and receives data to and from the cellular phone 1 and another Web server computer (not illustrated) according to, for example, the HTTP. The storage unit 25 also stores a map DB 251, an area data DB 252, and a VICS data file 253. The CPU 21 performs operations of, for example, storing and searching for necessary data by making a conversation with DBs using, for example, the Structured Query Language (SQL) in a schema in which the keys of fields in each DB are associated with each other. In the first embodiment, the map DB 251 is stored in, but not limited to, the storage unit 25 of the server computer 2. Alternatively, the map DB 251 may be stored, for example, in a DB server computer (not illustrated) connected to a local area network (LAN) via the communicator 26, and reading and writing of data may be performed as required.

Like a DB installed in a car navigation device, the map DB 251 stores road data, map data, coordinates (the latitude and longitude) of each facility, and map information for displaying each spot. The VICS data file 253 stores road traffic data in association with road data. Road traffic data includes, for example, congestion data, regulation data, and disaster data. In the first embodiment, the discussion will be given, using congestion data as an example of road traffic data. In the discussion, it is assumed that there are three levels of traffic congestion: no congestion, light congestion, and heavy congestion. The CPU 21 receives congestion data from the other Web server computer (not illustrated) connected via the communicator 26 and stores the congestion data in association with road data in the VICS data file 253. Upon receiving a route search request accompanied with data on a current location and destination data from the cellular phone 1 via the communicator 26, the CPU 21 performs route search with reference to the map DB 251 and the VICS data file 253 in accordance with the control program 25P

The CPU 21 reads road data and map data from the map DB 251 and reads congestion data stored in association with road data from the VICS data file 253. The CPU 21 searches for a plurality of routes to the destination in accordance with a route search program described in the control program 25P, by using, for example, Dijkstra's algorithm. When the CPU 21 performs route search, the CPU 21 calculates the cost of each route, considering, for example, the attribute of the road, a connection status, congestion data, estimated time, an estimated distance, and a link ID. Then, the CPU 21 determines a route with the minimum cost as a recommended route. The CPU 21 reads recommended route data, map data and road data on the recommended route, and the like from the map DB 251 and sends the recommended route data, the map data, the road data, and the like to the cellular phone 1. Thus, the cellular phone 1 may display a map, roads, the route, and the like on the display unit 14.

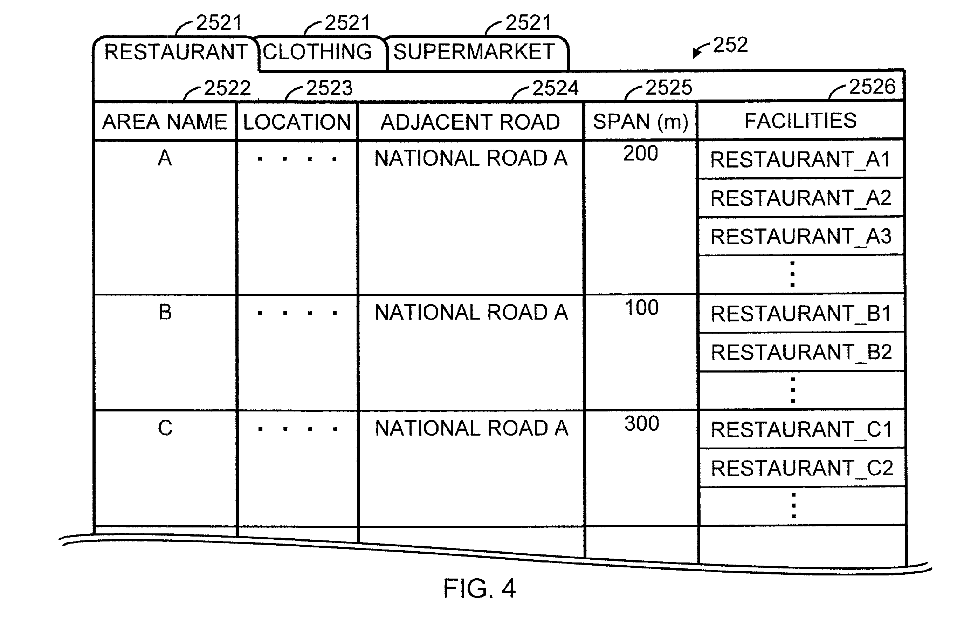

FIG. 4 is a diagram illustrating an example of data configuration of an area data DB according to a first embodiment of the present invention. The area data DB 252 stores data on the location of each area 3, data on facilities sited in the area 3, and the like for each attribute 2521. Attributes 2521 include, for example, a restaurant, a clothing store, a supermarket, a department store, a shopping mall, and a car dealer. Each facility is assigned with an attribute. In each area 3, facilities having a common attribute are grouped together. FIG. 4 illustrates an example of areas 3 assigned with "restaurant" as an attribute. In an area A, for example, restaurant_A1, restaurant_A2, and restaurant_A3... sited neighboring each other are grouped together. In the first embodiment, it is assumed for the sake of simplicity, but not limited to, that a plurality of facilities having the same attribute are grouped into one area 3. Alternatively, as in a shopping mall, a plurality of facilities having different attributes, for example, a clothing store, a restaurant, a movie theater, and a drug store, may be grouped in a given zone, and the given zone may be defined as one area 3. In the following discussion, it is assumed that a plurality of facilities having the same attribute are sited in each area 3.

The area data DB 252 includes, for example, an area name field 2522, a location field 2523, an adjacent road field 2524, a span field 2525, and a facilities field 2526. The area name field 2522 stores a unique area name for identifying a corresponding area 3. The location field 2523 stores, as location data, coordinates (the latitude and longitude) for identifying the center of the area 3 and a plurality of coordinates (the latitude and longitude) for identifying the periphery of the area 3. The adjacent road field 2524 stores road data on such a road that one side or the both sides of the road is adjacent to the area 3. Specifically, the adjacent road field 2524 stores data on a node (an intersection) and a link (a road) adjacent to the area 3 is stored as the data on the road adjacent to the area 3. For example, for the area 3A, data on a national road A that passes through the area 3A is stored, and nodes and links, out of the national road A, adjacent to the area 3 at the both sides are stored. The span field 2525 stores the span of the road adjacent to the area 3. Specifically, the span field 2525 stores the total of lengths assigned to the nodes and the links which constitute the road adjacent to the area 3.

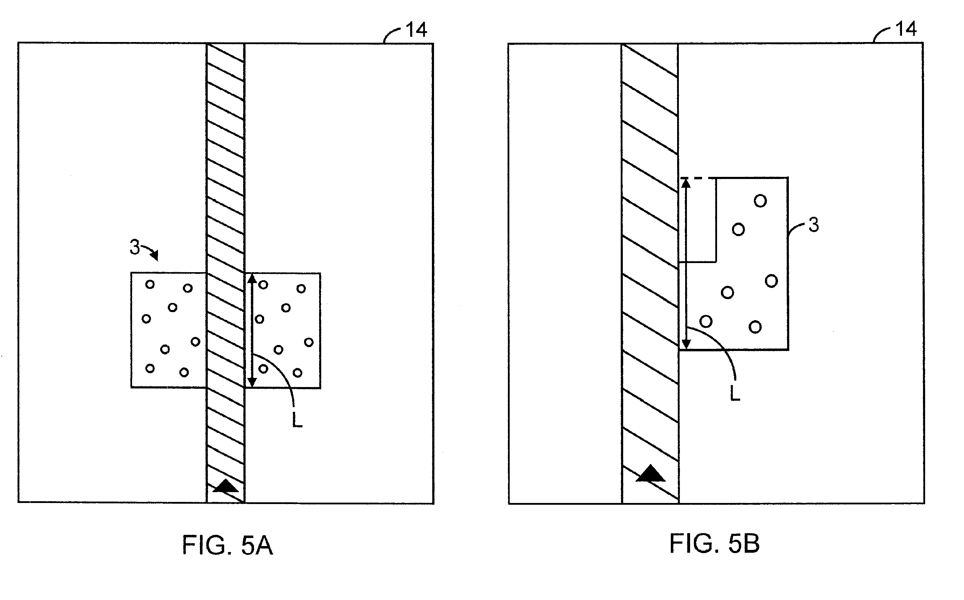

FIGs. 5A and 5B are diagrams each illustrating an example of details of an area. FIG. 5A illustrates an example in which a road extends through an area 3 and is adjacent to the area 3 at the both sides. FIG. 5B illustrates an example in which a road is adjacent to one side of an area 3. In FIG. 5A, the area 3 lies, as an adjacent area, at the both sides of the hatched road extending in the vertical direction. The road extends through the area 3. White circles in the area 3 denote locations of restaurants. The span data may be, for example, a length of a portion of the road adjacent to the area 3. In the example in FIG. 5A, the span data is a length L of a portion of the road extending through the area 3, which is adjacent to the one side of the area 3. In FIG. 5B, the reverse L-shaped area 3 is adjacent to the road on the route as an adjacent area. In some cases, only a portion of the areas 3 is adjacent to a road, as illustrated in FIG. 5B. The areas 3 adjacent to the roads in FIGs. 5A and 5B do not necessarily have to be contact with the roads and may lie apart from the roads within some distance, as discussed above. In this case, the span data may be a length L of the longest line segment out of line segments that are parallel to the road and extend through the area 3. Alternatively, the span data may be a distance between two points in the area 3, which is calculated in accordance with the coordinates (the latitude and longitude) of the two points. Specifically, the span data may be a distance between a point of the minimum latitude and longitude and a point of the maximum latitude and longitude.

The facilities field 2526 stores a plurality of pieces of information on restaurants sited in the area 3. The Information on a restaurant includes, for example, a restaurant name, the opening hours of the restaurant, the reputation of the restaurant, and the location data, such as coordinates (the latitude and longitude) of the restaurant. The data stored in the area data DB 252 may be input by an operator from the input unit 23 or may be downloaded from a Web server computer (not illustrated) to be stored in the area data DB 252 by the CPU 21. In the example illustrated in FIG. 4, the area A is on the national road A, and corresponding span data is stored as 200 m. Moreover, the area 3 has the restaurants A1, A2, and A3... The layout and stored contents of the area data DB 252 illustrated in FIG. 4 are just examples, and not limited to these examples as long as the relationship between items of data is maintained.

Upon completing the route search, the CPU 21 of the server computer 2 sends the data of roads on the route to the cellular phone 1 as a result of the route search. The CPU 21 of the server computer 2 reads area data of the areas 3 involved with the roads on the route from the area data DB 252 and sends the area data to the cellular phone 1. The area data includes an area name, location data, data on an adjacent road, span data, and facilities data discussed above. In addition, the CPU 21 sends VICS data stored in the VICS data file 253 to the cellular phone 1.

The cellular phone 1 illustrated in FIG. 2 receives map data, road data, VICS data, and area data necessary for route navigation from the server computer 2 via the communicator 16. The CPU 11 stores the received map data and road data in the map file 151 and stores the received area data in the area data file 152. The CPU 11 further stores the received VICS data in the VICS data file 153. Alternatively, the CPU 11 of the cellular phone 1 may calculate span data out of the area data in accordance with the location data and road data of the area 3. For example, the CPU 11 may read nodes and links of the road adjacent to the area 3 with reference to the map file 151. Then, the CPU 11 may determine a length of the road formed by the read continuous nodes and links as span data. The CPU 11 may store the calculated span data in the area data file 152, in association with the area 3.

The CPU 11 determines an area to be introduced, out of the areas 3 that are adjacent to the road on the route and have varying sizes, in accordance with a transit time of each area 3 and a given reference time stored in the storage unit 15. The transit time is calculated by dividing the span data of the road adjacent to the area 3 by estimated transit speed at which the road adjacent to the area 3 is traveled. The following types of speed, for example, may be set as the estimated transit speed: the movement speed of the cellular phone 1 at a point where a given distance (for example, 500 m) is left to reach the area 3 or the movement speed of the cellular phone 1 at a point where a given time (for example, two minutes) is left to reach the area 3. The CPU 11 obtains the movement speed of the cellular phone 1 in accordance with coordinates (the latitude and longitude) output from the GPS receiver 111 and time data output from the clock 18. Specifically, the CPU 11 calculates the movement speed by dividing the amount of displacement of coordinates (the latitude and longitude) between two points by the difference between two time data output from the clock 18 at the two points. When an in-vehicle car navigation device is used as the device 1 for selecting an area to be introduced, the movement speed may be obtained from a vehicle speed sensor installed in an autonomous navigation sensor or a speed meter of a vehicle via a controller area network (CAN). In this case, the average may be calculated in accordance with the movement speeds during given time period (for example, one minute).

Alternatively, the estimated transit speed may be an average of the movement speeds obtained at given timings. For example, the estimated transit speed may be an average of the movement speeds of the cellular phone 1 at a plurality of points where given distances (for example, 500 m, 600 m, 700 m, and 800 m) are left to reach the area 3. Alternatively, the estimated transit speed may be an average of the movement speeds of the cellular phone 1 at a plurality of points where given times (for example, 30 seconds, one minute, two minutes, and three minutes) are left to reach the area 3. In these cases, the CPU 11 obtains the average value (the average speed) by dividing the total of the movement speeds obtained by the above-discussed calculation by the sampling number and sets the average value as the transit speed. The above-discussed given distances and given times may be stored in the storage unit 15.

Alternatively, the transit speed may be calculated in accordance with the movement speed or the average speed discussed above and the attribute of the road adjacent to the area 3. An example in which the average speed is used will be discussed below. Attributes of the road include the road type, such as, an expressway, a national road, a motor road, and an alternate traffic, and the current congestion status of the road. The CPU 11 reads the road data of the target area 3 with reference to the area data file 152. The CPU 11 further reads congestion data corresponding to the obtained road data from the VICS data file 153. The CPU 11 reads coefficients corresponding to the read road data and congestion data with reference to the coefficient table 154.

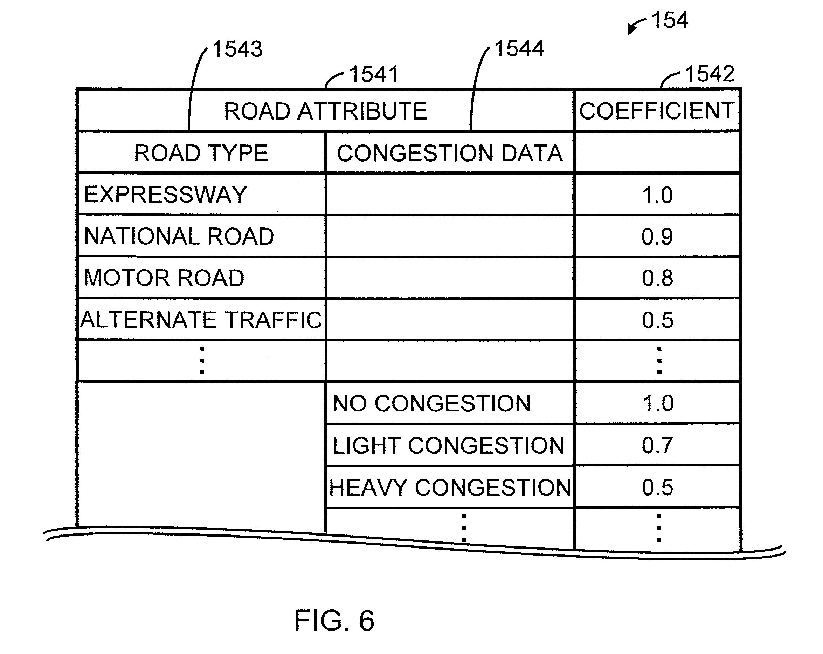

FIG. 6 is a diagram illustrating an example of data configuration of a coefficient table according to a first embodiment of the present invention. The coefficient table 154 stores coefficients for each road attribute. A road attribute field 1541 includes a road type field 1543 and a congestion data field 1544. Moreover, the coefficient table 154 includes a coefficient field 1542. The road type field 1543 stores the above-discussed road type, for example, an expressway, a national road, a motor road, or an alternate traffic, and the coefficient field 1542 stores a coefficient, in association with the road type. The coefficient is defined so that the value increases as ease of traveling increases. The above-discussed average speed is multiplied by the coefficient to calculate the estimated transit speed.

The congestion data field 1544 stores a level of traffic congestion, for example, no congestion, light congestion, and heavy congestion, and the coefficient field 1542 stores a coefficient in association with the level of traffic congestion. As the traffic congestion becomes heavier, a coefficient becomes smaller. For example, when the road type corresponding to the road adjacent to the areas 3 is "national road", and congestion data of the road, which is extracted from the VICS data file 153, is "heavy congestion", the CPU 11 reads coefficients 0.9 and 0.5. The CPU 11 calculates the transit speed by multiplying the average speed by these two coefficients 0.9 and 0.5. In the following discussion, an example employing the transit speed calculated in accordance with the average speed and the road attribute will be discussed.

The CPU 11 calculates the distance between the coordinates (the latitude and longitude) of the cellular phone 1 output from the GPS receiver 111 and the location data of the area 3 stored in the area data file 152. The CPU 11 may calculate the distance in accordance with, for example, the coordinates (the latitude and longitude) of the center of the area 3, stored as the location data of the area 3, and the coordinates (the latitude and longitude) of the cellular phone 1. The CPU 11 further calculates time for the cellular phone 1 to reach the area 3. The CPU 11 calculates the time to reach the area 3 by dividing the distance calculated by the above-discussed operation by the movement speed or the average speed for the last few minutes of the cellular phone 1. Hereinafter, the calculated time is referred to as an estimated arrival time.

When the calculated distance becomes under a given distance (for example, one kilometer) stored in the storage unit 15, or when the estimated arrival time becomes under given time (for example, five minutes) stored in the storage unit 15, the CPU 11 determines whether to introduce the area 3 on the road. In the following discussion, it is assumed that, when the estimated arrival time becomes under the given time, the determination is made. The CPU 11 reads the span data of the target areas 3 from the area data file 152. The CPU 11 divides the span data by the above-discussed transit speed. The CPU 11 reads a given reference time stored in the storage unit 15. For example, the reference time ranging from one minute to ten minutes is stored. An appropriate value as the reference time may be input by a user from the input unit 13 to be stored in the storage unit 15.

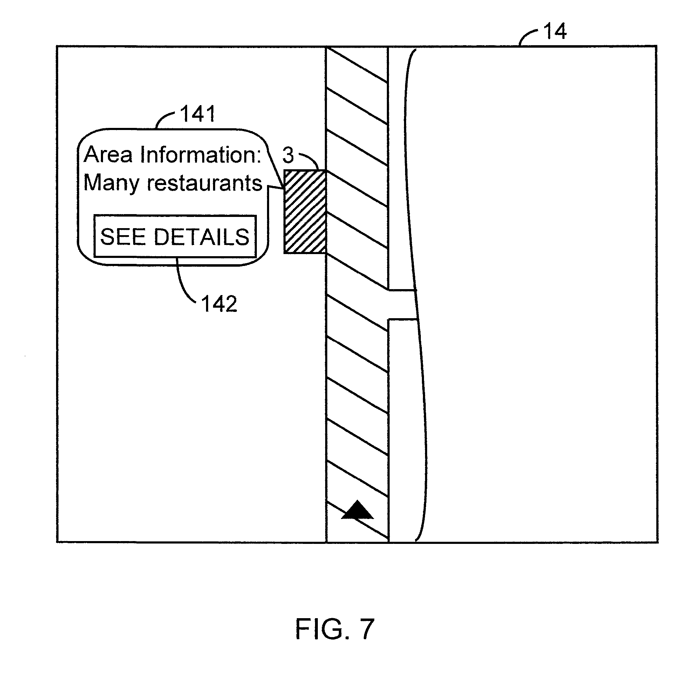

When a resultant value of dividing the span data by the transit speed falls within the range of the reference time, the CPU 11 determines the area 3 as an area to be introduced. The CPU 11 displays the determined area 3 to be introduced on the display unit 14. FIG. 7 is a diagram illustrating an example of a screen image of a displayed area according to a first embodiment of the present invention. When the area 3 is determined to be introduced, the CPU 11 colors the area 3, for example, red or blue. The CPU 11 further reads an attribute assigned to the area 3 with reference to the area data file 152. The CPU 11 describes the attribute in a text stored in the storage unit 15. The CPU 11 displays introduction information in which the attribute is described in the neighborhood of the area 3.

In an example in FIG. 7, a balloon box 141 that extends from the area 3 is displayed, and "Area Information: many restaurants" is displayed in the balloon box 141 as introduction information. The CPU 11 also displays a "SEE DETAILS" button 142 in the balloon box 141. When input on the "SEE DETAILS" button 142 has been received via the input unit 13 which is a touch panel, the CPU 11 displays facilities data corresponding to the area 3, which has been read from the area data file 152. For example, the restaurant name, the description of the restaurant, and the opening hours of the restaurant are stored as the facilities data. Thus, the area 3 that has appropriate span data may be determined as an area to be introduced, in accordance with the movement status of a user carrying the cellular phone 1.

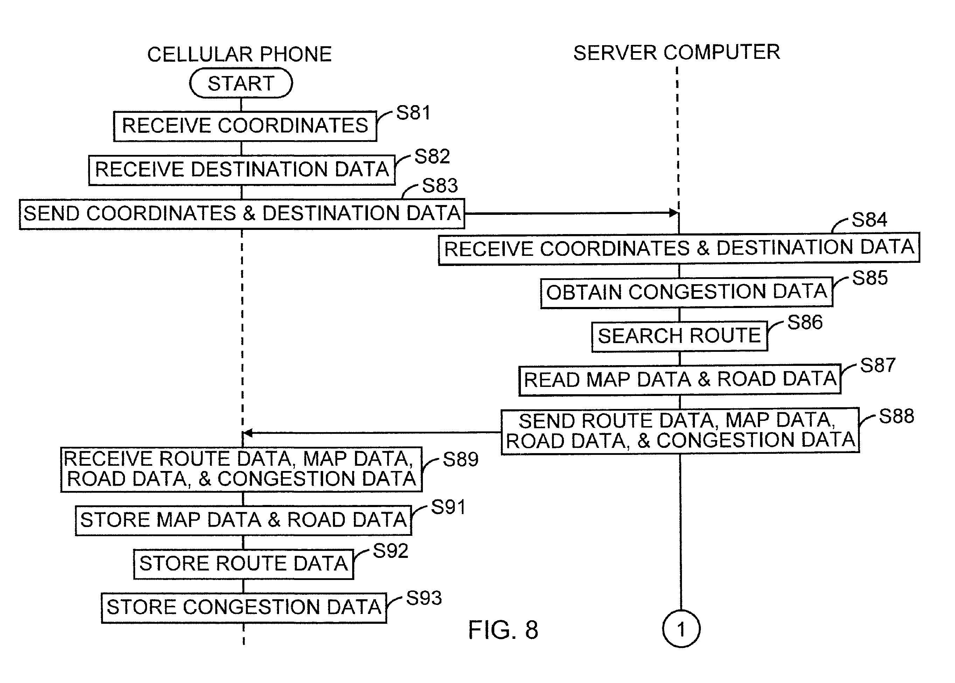

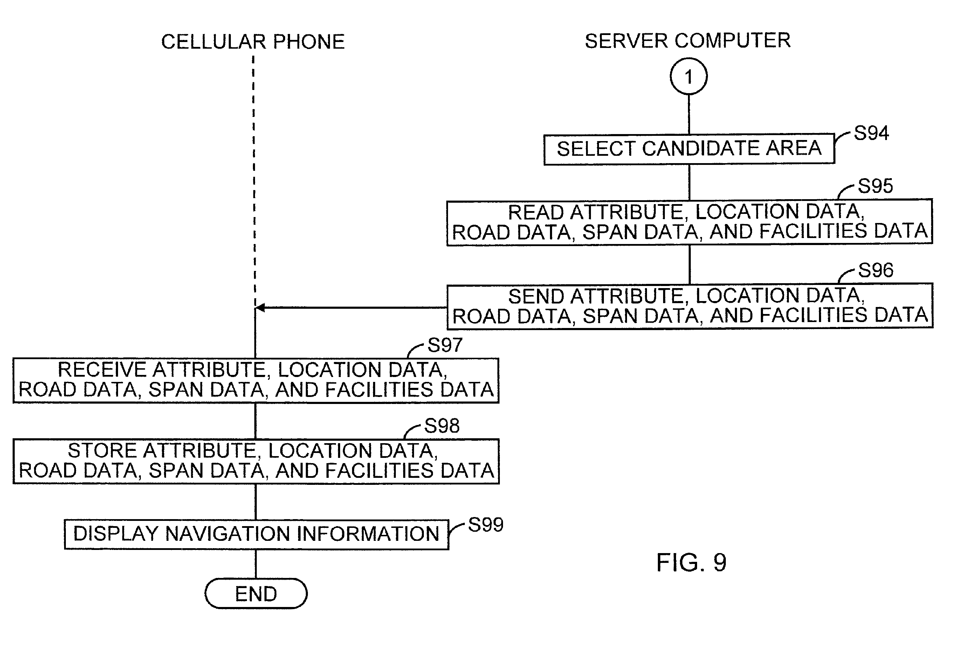

Operations in the determination process executed by the cellular phone 1 according to the first embodiment of the present invention will be discussed with reference to operation charts. FIGs. 8 and 9 are operation charts illustrating an operation flow of an example of a process for selecting a candidate area according to a first embodiment of the present invention.
In operation S81, the CPU 11 invokes the control program 15P and a browser (not illustrated) so as to perform route search. The CPU 11 receives input of the uniform resource locator (URL) of the server computer 2 via the input unit 13 and then accesses the server computer 2. The CPU 11 receives the current coordinates (the latitude and longitude) of the cellular phone 1 output from the GPS receiver 111.
In operation S82, a user inputs a destination, for example, a facility name, an address, or a telephone number, on the browser so as to set a desired destination. The CPU 11 receives input of the destination data via the input unit 13.

In operation S83, the CPU 11 sends, to the server computer 2, the received coordinates (the latitude and longitude) indicating the current location of the user and the destination data received via the input unit 13.
In operation S84, the server computer 2 receives the coordinates (the latitude and longitude) and the destination data via the communicator 26.
In operation S85, the CPU 21 invokes the control program 25P The CPU 21 searches for a plurality of possible routes to the destination in accordance with map data and road data stored in the map DB 251. The CPU 21 obtains congestion data, which corresponds to the road data of the plurality of routes having been searched for, from an external server computer via the communicator 26.
In operation S86, The CPU 21 stores the congestion data corresponding to the road data in the VICS data file 253. The CPU 21 searches for a route in which the distance to the destination is shortest, the movement time is shortest, or the movement cost (including, for example, an expressway toll) is smallest in accordance with the map data and the road data stored in the map DB, the congestion data stored in the VICS data file 253, and the like.

In operation S87, the CPU 21 stores route data of a route with the minimum cost in the storage unit 25. The stored route data includes data on nodes and links from the current location to the destination. The CPU 21 reads map data and road data relating to the route from the map DB 251.
In operation S88, the CPU 21 sends, to the cellular phone 1, the route data of the route found in operation S86, the map data and road data read in operation S87, and the congestion data obtained in operation S85.

In operation S89, The CPU 11 of the cellular phone 1 receives the route data, the map data, the road data, and the congestion data sent from the server computer 2 via the communicator 16.
In operation S91, the CPU 11 stores the received map data and road data in the map file 151.
In operation S92, the CPU 11 stores the received route data in the storage unit 15.
In operation S93, the CPU 11 stores the received congestion data in the VICS data file 153.
In operation S94, the CPU 21 of the server computer 2 selects, with reference to the area data DB 252, an area 3 that includes nodes and links on the route found in operation S86. Specifically, the CPU 21 selects an area 3 adjacent to nodes and links that match nodes and links on the route with reference to nodes and links stored in road data corresponding to the area 3 in the area data DB 252. The CPU 21 treats the selected area 3 as a candidate area for an area to be introduced.

In operation S95, the CPU 21 reads the attribute, location data, road data, span data, and facilities data of the candidate area from the area data DB 252.
In operation S96, the CPU 21 sends the attribute, location data, road data, span data, and facilities data of the candidate area, which have been read, to the cellular phone 1.
In operation S97, the CPU 11 of the cellular phone 1 receives the attribute, location data, road data, span data, and facilities data of the candidate area, which have been sent.
In operation S98, the CPU 11 stores, in the area data file 152, the attribute, location data, road data, span data, and facilities data, which have been received, in association with the candidate area.

In operation S99, the CPU 11 displays navigation information on the route to be traveled on the display unit 14 in accordance with the route data stored in the storage unit 15, the map data and road data stored in the map file 151, and the congestion data stored in the VICS data file 153.
While an example in which route search is performed has been discussed in the first embodiment, route search may not necessarily be performed. For example, the CPU 11 of the cellular phone 1 may determine, in accordance with the coordinates (the latitude and longitude) output from the GPS receiver 111 and changes in the coordinates (the latitude and longitude) over time, that the cellular phone 1 is traveling on an expressway. In this case, the CPU 11 sends, to the server computer 2, data on the current location and data indicating that the cellular phone 1 is traveling on an expressway. That is, the cellular phone 1 sends information indicating that the road on the route for the destination is the expressway on which the cellular phone 1 is currently traveling. The CPU 21 of the server computer 2 determines an area 3 on the expressway as a candidate area for an area to be introduced and reads data on the candidate area from the area data DB 252. Then, the CPU 21 sends to the cellular phone 1 the attribute, location data, road data, span data, and facilities data of the candidate area, and map data, road data, congestion data, and the like related to the expressway. Route navigation and selection of a candidate area are completed by the above-discussed sequence of operations. Operations of determining a candidate area as an area to be introduced will be discussed below.

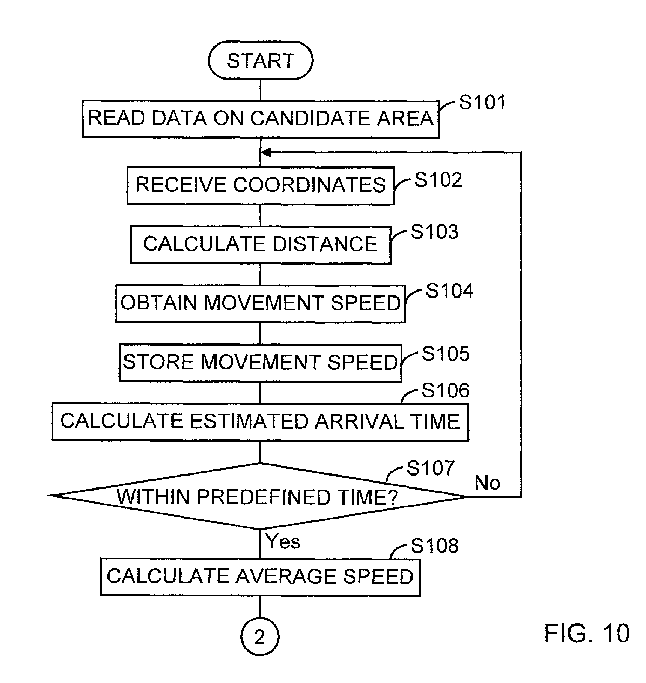

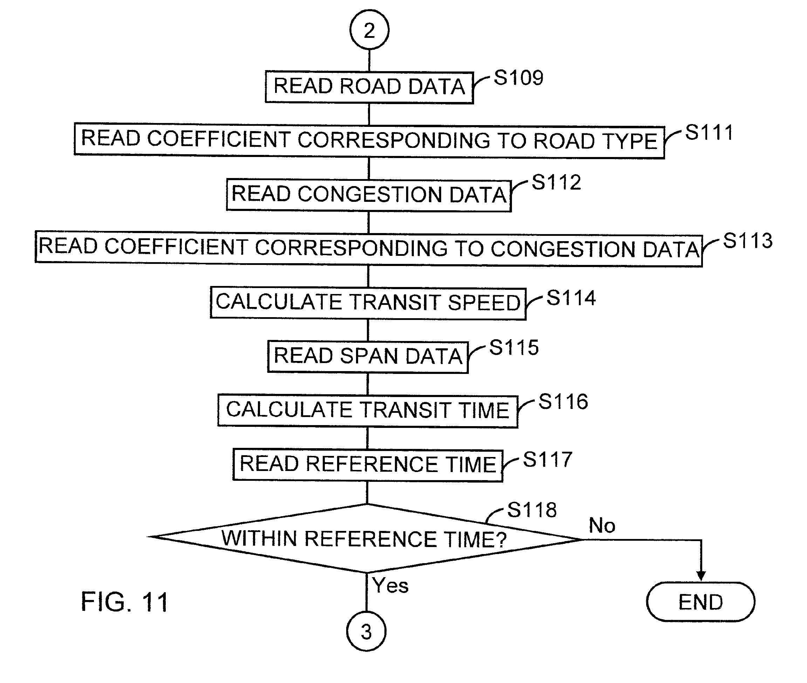

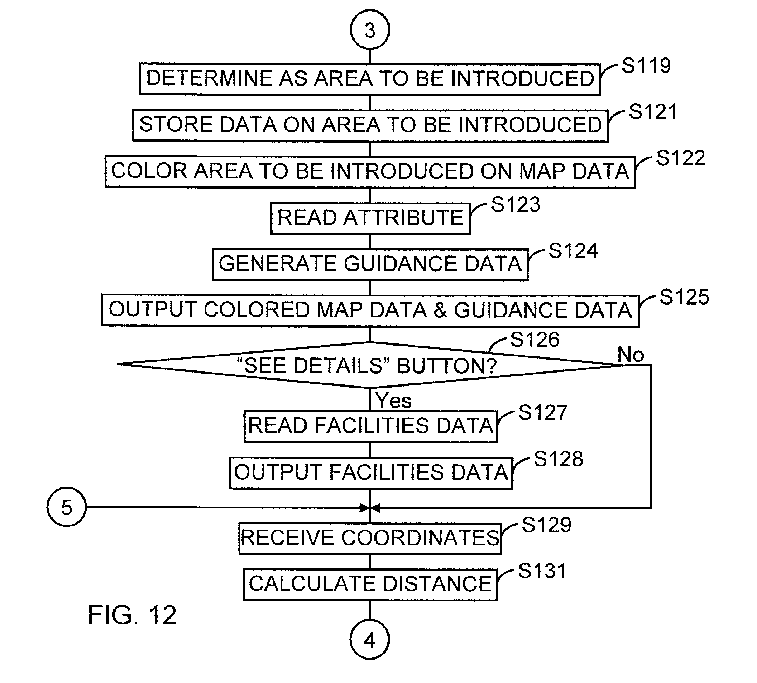

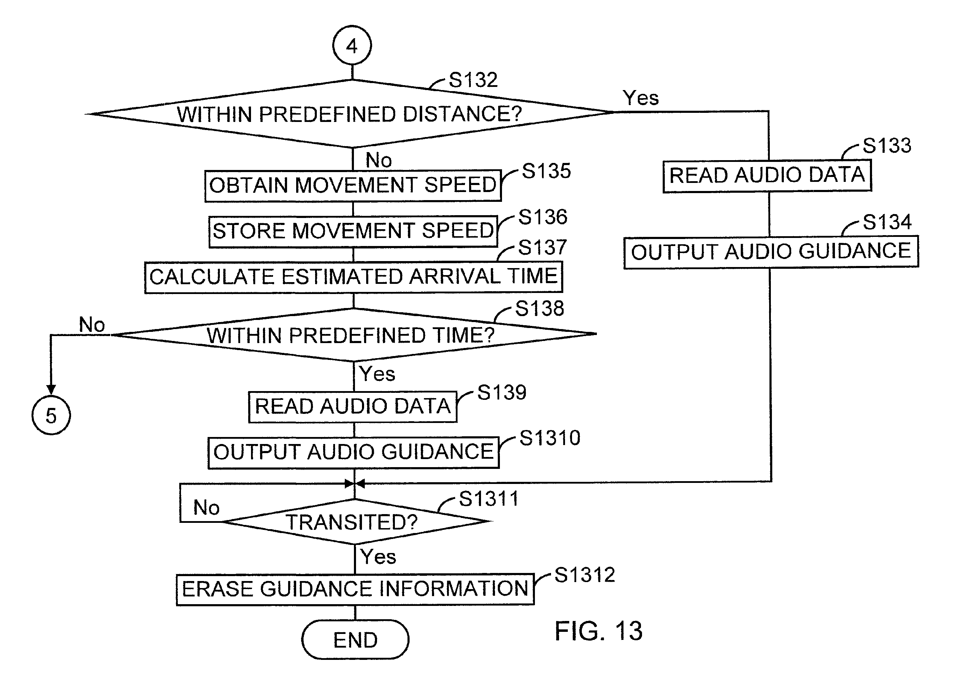

FIGs. 10 to 13 are operation charts illustrating an operation flow of an example of a process for determining a candidate area as an area to be introduced according to a first embodiment of the present invention.
In operation S101, the CPU 11 reads data on a candidate area on the route, which is stored in the area data file 152 in operation S98.
In operation S102, the CPU 11 receives coordinates (the latitude and longitude) output from the GPS receiver 111.
In operation S103, the CPU 11 reads the location data of the candidate area from the area data file 152. The CPU 11 calculates the distance from the cellular phone 1 to the candidate area in accordance with the coordinates (the latitude and longitude) of the center of the candidate area, out of the read location data, and the coordinates (the latitude and longitude) received in operation S102. Alternatively, any coordinates (the latitude and longitude) stored as the location data of the candidate area may be used instead of the coordinates (the latitude and longitude) of the center of the candidate area.

In operation S104, the CPU 11 obtains (calculates) movement speed in accordance with the coordinates (the latitude and longitude) output from the GPS receiver 111 at different times and time data output from the clock 18 at the different times.
In operation S105, the CPU 11 stores the obtained movement speed as a history in the storage unit 15, in association with the time data of the corresponding time out of the different times.
In operation S106, the CPU 11 calculates estimated arrival time to reach the candidate area in accordance with the distance and the movement speed calculated in operations S103 and S104 respectively.

In operation S107, the CPU 11 reads given time (for example, three minutes) stored in the storage unit 15. The CPU 11 determines whether the estimated arrival time falls within the read given time. When the CPU 11 determines that the estimated arrival time does not fall within the given time ("No" in operation S107), the process proceeds to operation S102 to repeat the above-discussed operations.
In operation S108, when the CPU 11 determines that the estimated arrival time falls within the given time ("Yes" in operation S107), the CPU 11 calculates average speed that is the average of the movement speeds for given time in accordance with the movement speed stored as a history in operation S105. For example, the CPU 11 may calculate the average speed in accordance with the current movement speed and the movement speeds for the last three minutes.

In operation S109, the CPU 11 reads road data corresponding to the candidate area from the area data file 152.
In operation S111, the CPU 11 reads from the coefficient table 154 a coefficient corresponding to the road type out of the road data, of the road adjacent to the candidate area.
In operation S112, the CPU 11 reads the congestion data of the road adjacent to the candidate area from the VICS data file 153.
In operation S113, the CPU 11 reads a coefficient corresponding to the read congestion data from the coefficient table 154.
In operation S114, the CPU 11 calculates transit speed by multiplying the average speed calculated in operation S108 by the two coefficients read in operations S111 and S113. Alternatively, the multiplying coefficient may be one of the coefficients read in operations S111 and S113.

In operation S115, the CPU 11 reads span data from the area data file 152.
In operation S116, the CPU 11 calculates the transit time of the candidate area in accordance with the read span data and the calculated transit speed.
In operation S117, the CPU 11 reads given reference time (for example, one minute to ten minutes) stored in the storage unit 15.
In operation S118, the CPU 11 determines whether the calculated transit time falls within the range of the reference time. When the CPU 11 determines that the transit time does not fall within the range of the reference time ("No" in operation S118), the CPU 11 determines not to introduce the candidate area and thus completes the operations.
In operation S119, when the CPU 11 determines that the transit time falls within the range of the reference time ("Yes" in operation S118), the CPU 11 determines the candidate area as an area to be introduced.

In operation S121, the CPU 11 stores, in the storage unit 15, data on the area to be introduced.
In operation S122, the CPU 11 performs coloring, to color the area to be introduced, on the map data with a given color stored in the storage unit 15 with reference to the location data of the area to be introduced stored in the area data file 152.
In operation S123, the CPU 11 reads an attribute corresponding to the area to be introduced from the area data file 152.
In operation S124, the CPU 11 generates introduction data that includes the read attribute and an area name.
In operation S125, the CPU 11 outputs the colored map data and the generated introduction data to the display unit 14, as illustrated in FIG. 7. Alternatively, these items of data may be displayed on a monitor (not illustrated) installed in a vehicle instead of the display unit 14 of the cellular phone 1. In this case, the cellular phone 1 may be connected to the monitor with a cable (not illustrated) in advance.

In operation S126, the CPU 11 determines whether input on the "SEE DETAILS" button 142 has been received via the input unit 13. When the CPU 11 determines that input on the "SEE DETAILS" button 142 has not been received ("No" in operation S126), the process proceeds to operation S129.
In operation S127, when the CPU 11 determines that input on the "SEE DETAILS" button 142 has been received via the input unit 13 ("Yes" in operation S126), the CPU 11 reads facilities data corresponding to the area to be introduced from the area data file 152.
In operation S128, the CPU 11 outputs the read facilities data to the display unit 14.

In operation S129, the CPU 11 receives again coordinates (the latitude and longitude) output from the GPS receiver 111.
In operation S131, the CPU 11 reads, from the area data file 152, the location data of the area to be introduced. The CPU 11 calculates the distance from the cellular phone 1 to the area to be introduced, in accordance with the coordinates (the latitude and longitude) of the center of the area to be introduced, out of the read location data, and the coordinates (the latitude and longitude) received in operation S129.
In operation S132, the CPU 11 reads a given distance stored in the storage unit 15. The given distance is a distance that indicates the timing of providing an introduction to the area to be introduced. The given distance may be stored as 700 m, for example. The CPU 11 determines whether the calculated distance to the area to be introduced falls within the given distance stored in the storage unit 15.

In operation S133, when the CPU 11 determines that the calculated distance to the area to be introduced falls within the given distance stored in the storage unit 15 ("Yes" in operation S132), the CPU 11 reads audio data stored in advance in the storage unit 15. The audio data may be, for example, for "About 700 m left to reach the area."
In operation S134, the CPU 11 outputs an audio introduction from the speaker 19. Alternatively, the audio introduction may be output from a speaker of a monitor or a vehicle, which is connected to the cellular phone 1 via a cable. Then, the process proceeds to operation S1311.

In operation S135, when the CPU 11 determines that the distance to the area to be introduced does not fall within the given distance stored in the storage unit 15 ("No" in operation S132), the CPU 11 obtains (calculates) movement speed in accordance with coordinates (the latitude and longitude) output from the GPS receiver 111 at different times and time data output from the clock 18 at the different times.
In operation S136, the CPU 11 stores the obtained movement speed as a history in the storage unit 15, in association with the time data of the corresponding time out of the different times.
In operation S137, the CPU 11 calculates estimated arrival time to reach the area to be introduced, in accordance with the distance calculated in operation S131 and the movement speed.

In operation S138, the CPU 11 reads given time (for example, one minute) from the storage unit 15. The given time indicates the timing of providing introduction to the area to be introduced. The CPU 11 determines whether the estimated arrival time falls within the given time stored in the storage unit 15. When the CPU 11 determines that the estimated arrival time does not fall within the given time stored in the storage unit 15 ("No" in operation S138), the process returns to operation S129 to repeat the above-discussed operations.
In operation S139, when the CPU 11 determines that the estimated arrival time falls within the given time stored in the storage unit 15 ("Yes" in operation S138), the CPU 11 reads audio data stored in the storage unit 15.
In operation S1310, the CPU 11 outputs an audio introduction from the speaker 19. The audio data may be, for example, for "The area will be reached in about one minute. The area is a restaurant area." In this case, an attribute "restaurant" of the area to be introduced stored in the area data file 152 may be read, the attribute may be inserted in a given template text, and then the audio introduction may be output.
While an audio introduction is employed in operations S1310 and S134, a text corresponding to the audio introduction may be displayed alternatively on the display unit 14.

The CPU 11 outputs the audio introduction from the speaker 19. Thus, while the area to be introduced may be visually checked on a monitor, it may also be recognized by audio that the area to be introduced is approaching.
In operation S1311, the CPU 11 determines whether the area to be introduced has been transited. This determination may be made by comparing the location data of the area to be introduced stored in the area data file 152 with coordinates (the latitude and longitude) output from the GPS receiver 111 over time.

When the CPU 11 determines that the area to be introduced has not been transited ("No" in operation S1311), the CPU 11 repeats this operation.
In operation S1312, when the CPU 11 determines that the area to be introduced has been transited ("Yes" in operation S1311), the CPU 11 erases the introduction data, the colored area, and the facilities data displayed on the display unit 14 in operations S125 and S128.
As discussed above, a suitable area 3 may be proposed as an area to be introduced, in accordance with the situation in which the user of the cellular phone 1 is, for example, walking, traveling in a vehicle, or caught up in traffic congestion.

### Second Embodiment

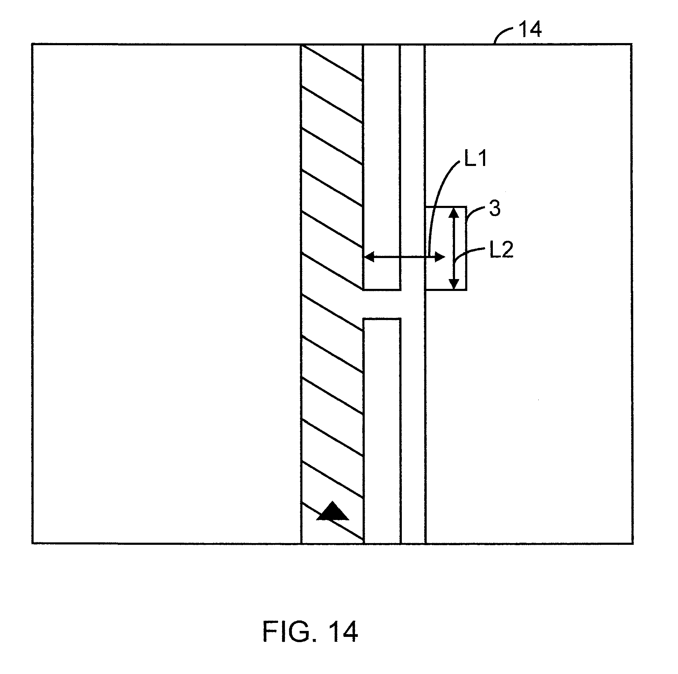

In a second embodiment of the present invention, it is assumed that the area 3 lies apart from a road on the route within a given distance. In addition to the candidate area adjacent to the road on the route discussed in the first embodiment, an area 3 that lies apart from the road on the route within a given distance may be selected as an auxiliary candidate area. The details will now be discussed. FIG. 14 is a diagram illustrating an example of details of an area. In FIG. 14, a hatched road represents a road on the route obtained as a result of route search. There is another road (referred to as a back road) parallel to the hatched road and a short connecting road connects the hatched road and the back road. For the sake of simplicity, but not limited to, it is assumed that the back road extends in parallel with the hatched road in the following discussion.

The area 3 is adjacent to the back road with the longitudinal direction of the area 3 extending along the back road. The CPU 11 determines the area 3 as an auxiliary candidate area for an area to be introduced, when the distance between the hatched road and the area 3 falls within a given distance stored in the storage unit 15. The distance between the hatched road and the area 3 may be, for example, the minimum distance between the coordinates (the latitude and longitude) of the center of the area 3 stored in the area data file 152 and the hatched road apart from the area 3 within a given distance. Alternatively, it may be the minimum distance between any coordinates (the latitude and longitude) in the area 3 and the hatched road. Some point in the area 3 needs to lie within a given distance. For example, the minimum distance between the hatched road and the area 3 may fall within the given distance, or the maximum distance between the hatched road and the area 3 may fall within the given distance. In the second embodiment, the minimum distance L1, as illustrated in FIG. 14 for example, between the coordinates (the latitude and longitude) of the center of the area 3 and the hatched road is used for the distance between the hatched road and the area 3. The given distance is "within 500 m" or "50 m to 300 m", for example.

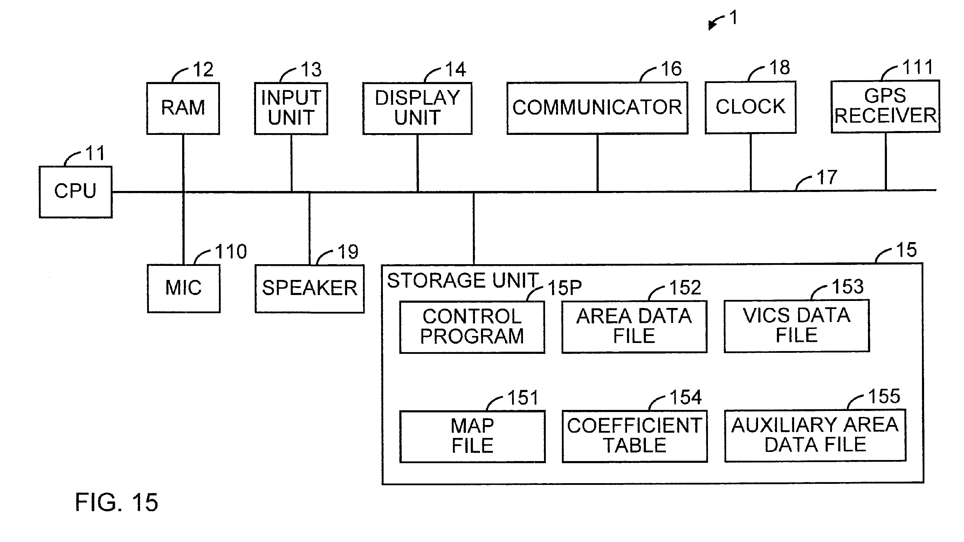

The transit speed is calculated in accordance with the span data of the auxiliary candidate area. The span of the auxiliary candidate area may be length L2 illustrated in FIG. 14. The length L2 is a length of a side, which is adjacent to the back road, of the auxiliary candidate area. The span data is stored in the area data DB 252, in association with the auxiliary candidate area. FIG. 15 is a block diagram illustrating an example of a hardware configuration of a cellular phone according to a second embodiment of the present invention. In addition to the hardware configuration according to the first embodiment, an auxiliary area data file 155 is provided. The CPU 11 stores, in the auxiliary area data file 155, data on an auxiliary candidate area that lies apart from a road on the route within a given distance. In the auxiliary area data file 155, as in the area data file 152 and the area data DB 252 discussed in the first embodiment, data on the auxiliary candidate area such as an attribute, a name, a location, an adjacent road, a span, facilities and the like is stored.

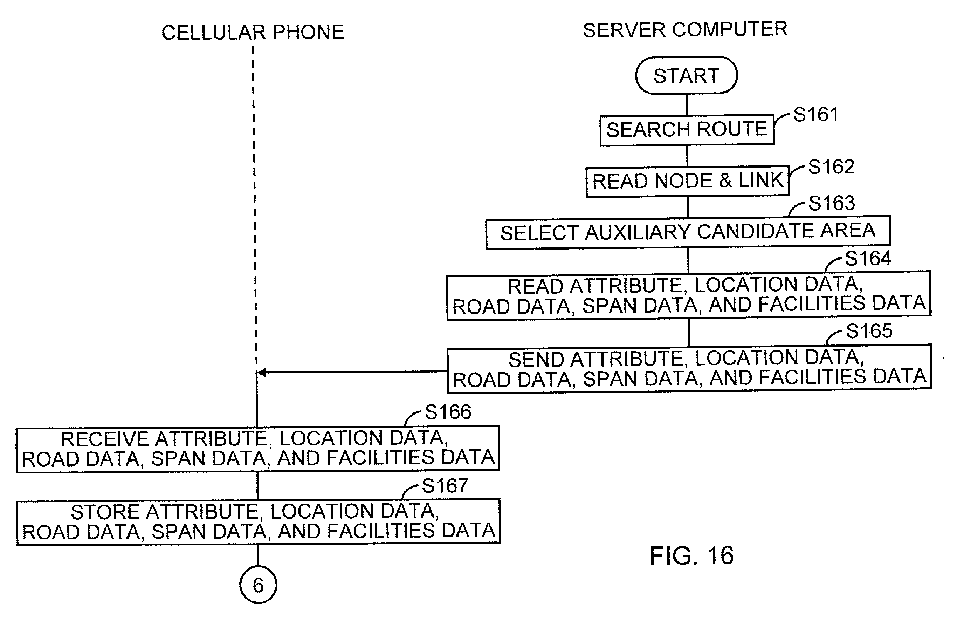

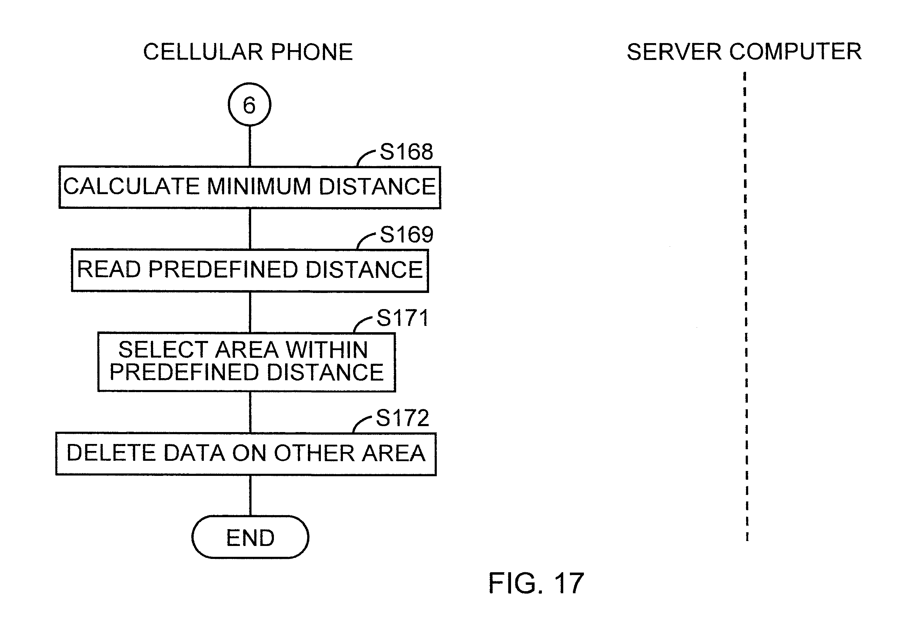

Selection of an auxiliary candidate area for an area to be introduced, executed by a cellular phone illustrated in FIG. 15, will be discussed with reference to operation charts. FIGs. 16 and 17 are operation charts illustrating an operation flow of an example of a process for selecting an auxiliary candidate area according to a second embodiment of the present invention.
In operation S161, the CPU 21 of the server computer 2 searches for a route, as in operation S86 in the first embodiment.
In operation S162, the CPU 21 reads a given distance stored in the storage unit 25. The given distance may be, for example, 500 m. The CPU 21 reads, with reference to the map DB 251, nodes and links of roads lying apart from the route found in the route search within the given distance. Specifically, the CPU 21 reads nodes and links lying apart from the route within a distance of 500 m in accordance with location data assigned to nodes and links on the route. In this case, the CPU 21 may not read the nodes and links on the route.

In operation S163, the CPU 21 selects an area 3 adjacent to the read nodes and links with reference to the area data DB 252. Specifically, the CPU 21 selects an area 3 adjacent to nodes and links that match the read nodes and links with reference to nodes and links stored in the adjacent road field 2524 of the area 3 in the area data DB 252. The CPU 21 treats the selected area 3 as an auxiliary candidate area for an area to be introduced.
In operation S164, the CPU 21 reads the attribute, location data, road data, span data, and facilities data of the auxiliary candidate area from the area data DB 252.
In operation S165, the CPU 21 sends the read attribute, location data, road data, span data, and facilities data of the auxiliary candidate area to the cellular phone 1.

In operation S166, the CPU 11 of the cellular phone 1 receives the sent attribute, location data, road data, span data, and facilities data of the auxiliary candidate area.
In operation S167, the CPU 11 stores the received attribute, location data, road data, span data, and facilities data of the auxiliary candidate area in the auxiliary area data file 155, in association with the auxiliary candidate area. Alternatively, the CPU 11 of the cellular phone 1 may calculate span data out of the area data in accordance with the location data and road data of the auxiliary candidate area. For example, the CPU 11 may read nodes and links of the road adjacent to the auxiliary candidate area. Then, the CPU 11 may determine a span of the road formed by the read continuous nodes and links as span data. The CPU 11 may store the calculated span data in the auxiliary area data file 155, in association with the auxiliary candidate area.

The CPU 11 performs the following operations to narrow down the auxiliary candidate areas for an area to be introduced.
In operation S168, the CPU 11 calculates the minimum distance between each auxiliary candidate area whose data is stored in the auxiliary area data file 155 and a road on the route. Specifically, the CPU 11 reads coordinates (the latitude and longitude) of a plurality of given points in the auxiliary candidate area. Similarly, the CPU 11 reads coordinates (the latitude and longitude) of a plurality of given points in nodes and links, apart from the auxiliary candidate area within a given distance, on the route. The CPU 11 calculates distances between the coordinates (the latitude and longitude) related to the auxiliary candidate area and the coordinates (the latitude and longitude) related to the nodes and the links. The CPU 11 determines a distance of the smallest value, out of the calculated distances between the plurality of points, as the minimum distance.

The CPU 11 performs these operations on all of the auxiliary candidate areas whose data are stored in the auxiliary area data file 155.
In operation S169, the CPU 11 reads a given distance stored in the storage unit 15. The given distance is, for example, 100m. An appropriate value as the given distance may be input from the input unit 13 to be stored in the storage unit 15.
In operation S171, the CPU 11 selects the auxiliary candidate areas having the minimum distances calculated in operation S168, which fall within the given distance read in operation S169.
In operation S172, the CPU 11 deletes, from the auxiliary area data file 155, data on the auxiliary candidate areas other than the auxiliary candidate areas selected in operation S171.
Thus, the areas 3 lying apart from roads on the route within a given distance may be selected as auxiliary candidate areas for an area to be introduced. While, for the sake of simplicity, the auxiliary area data file 155 is provided in the second embodiment, the data on the auxiliary candidate areas may be stored integrally in the area data file 152.

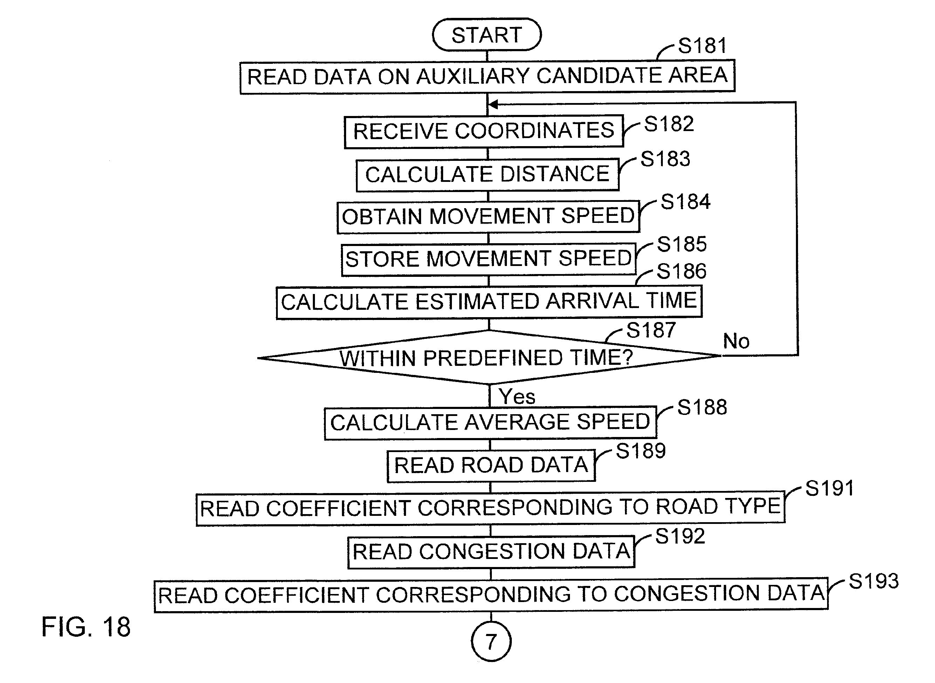

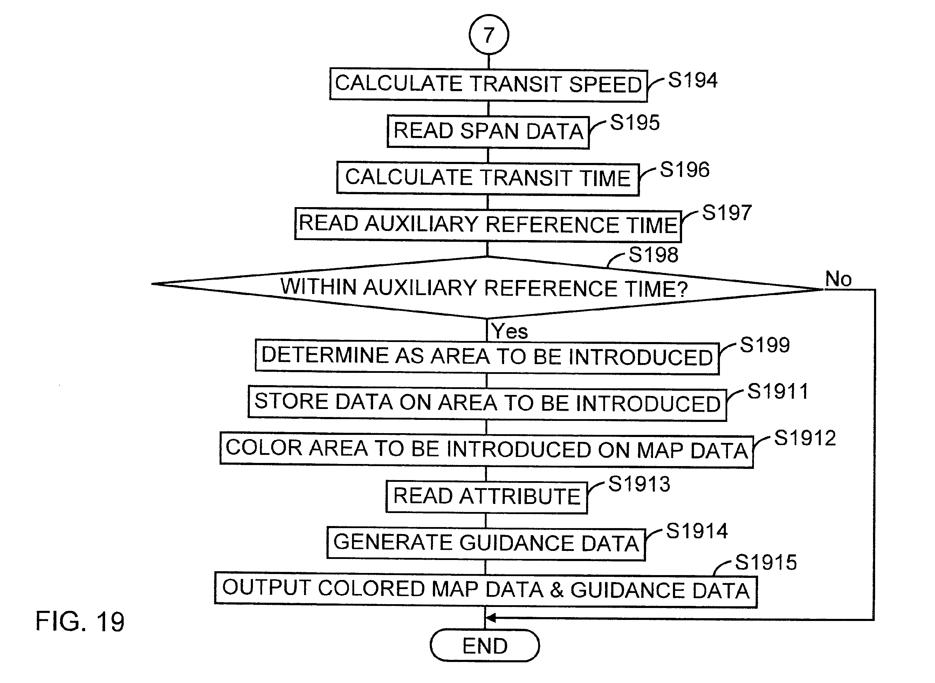

Operations of determining an auxiliary candidate area as an area to be introduced, from among the auxiliary candidate areas whose data are stored in the auxiliary area data file 155 will be discussed below. FIGs. 18 and 19 are operation charts illustrating an operation flow of an example of a process for determining an auxiliary candidate area as an area to be introduced according to a second embodiment of the present invention.
In operation S181, the CPU 11 reads data on an auxiliary candidate area left in the auxiliary area data file 155 by a selection operation in operation S171.
In operation S182, the CPU 11 receives coordinates (the latitude and longitude) output from the GPS receiver 111.
In operation S183, the CPU 11 reads the location data of an auxiliary candidate area from the auxiliary area data file 155. The CPU 11 calculates the distance from the cellular phone 1 to the auxiliary candidate area in accordance with the coordinates (the latitude and longitude) of the center of the auxiliary candidate area, out of the read location data, and the coordinates (the latitude and longitude) received in operation S182.

In operation S184, the CPU 11 obtains movement speed in accordance with coordinates (the latitude and longitude) output from the GPS receiver 111 at different times and time data output from the clock 18 at the different times.
In operation S185, the CPU 11 stores the obtained movement speed as a history in the storage unit 15, in association with the time data of one of the different times.
In operation S186, the CPU 11 calculates estimated arrival time to reach the auxiliary candidate area in accordance with the distance calculated in operation S183 and the movement speed obtained in operation S184.

In operation S187, the CPU 11 reads given time (for example, three minutes) stored in the storage unit 15. The CPU 11 determines whether the estimated arrival time falls within the read given time. When the CPU 11 determines that the estimated arrival time does not fall within the given time ("No" in operation S187), the process proceeds to operation S182 to repeat the above-discussed operations.
In operation S188, when the CPU 11 determines that the estimated arrival time falls within the given time ("Yes" in operation S187), the CPU 11 calculates average speed that is the average of the movement speeds for given time period in accordance with the movement speed stored as a history in operation S185.

In operation S189, the CPU 11 reads road data corresponding to the auxiliary candidate area from the auxiliary area data file 155.
In operation S191, the CPU 11 reads a coefficient corresponding to the road type, out of the road data, of the road adjacent to the auxiliary candidate area from the coefficient table 154.
In operation S192, the CPU 11 reads the congestion data corresponding to the road adjacent to the auxiliary candidate area from the VICS data file 153.
In operation S193, the CPU 11 reads a coefficient corresponding to the read congestion data from the coefficient table 154.
In operation S194, the CPU 11 calculates transit speed by multiplying the average speed calculated in operation S188 by the two coefficients read in operations S191 and S193. Thus, transit speed may be calculated, considering the attributes of roads that do not lie on the route.

In operation S195, the CPU 11 reads span data from the auxiliary area data file 155.
In operation S196, the CPU 11 calculates the transit time of the auxiliary candidate area in accordance with the read span data and the calculated transit speed.
In operation S197, the CPU 11 reads given auxiliary reference time (for example, three minutes to seven minutes) stored in the storage unit 15. The auxiliary reference time may be the same as the reference time. In the following discussion, it is assumed that the range of the auxiliary reference time is shorter than the range of the reference time so as to give a higher priority to introduction to the candidate area adjacent to the road on the route discussed in the first embodiment than to introduction to an auxiliary candidate area lying apart from the road on the route within a given distance.
In operation S198, the CPU 11 determines whether the calculated transit time falls within the range of the auxiliary reference time. When the CPU 11 determines that the transit time does not fall within the range of the reference time ("No" in operation S198), the CPU 11 determines not to introduce the auxiliary candidate area and thus completes the operations.
In operation S199, when the CPU 11 determines that the transit time falls within the range of the auxiliary reference time ("Yes" in operation S198), the CPU 11 determines the auxiliary candidate area as an area to be introduced.

In operation S1911, the CPU 11 stores data of the area to be introduced in the storage unit 15.
In operation S1912, the CPU 11 performs coloring, to color the area to be introduced, on the map data with a given color stored in the storage unit 15 with reference to the location data of the area to be introduced stored in the auxiliary area data file 155. The CPU 11 performs coloring in operation S1912, with a color different from a color with which coloring is performed in operation S122. Specifically, the CPU 11 may perform coloring with yellow in operation S1912 and with red in operation S122, for example. An area to be introduced adjacent to the road on the route may be highlighted relative to an area to be introduced lying apart from the road on the route within a given distance. For example, an area to be introduced adjacent to the road on the route may be colored with red having opacity of 90%, and an area to be introduced lying apart from the road on the route within a given distance may be colored with red having opacity of 50%.

In operation S1913, the CPU 11 reads an attribute corresponding to the area to be introduced from the auxiliary area data file 155.
In operation S1914, the CPU 11 generates introduction data that includes the read attribute and an area name.
In operation S1915, the CPU 11 outputs the colored map data and the generated introduction data to the display unit 14.
Since the subsequent operations are similar to those in operation S126 and the subsequent operations in the first embodiment, the detailed discussion is omitted here.

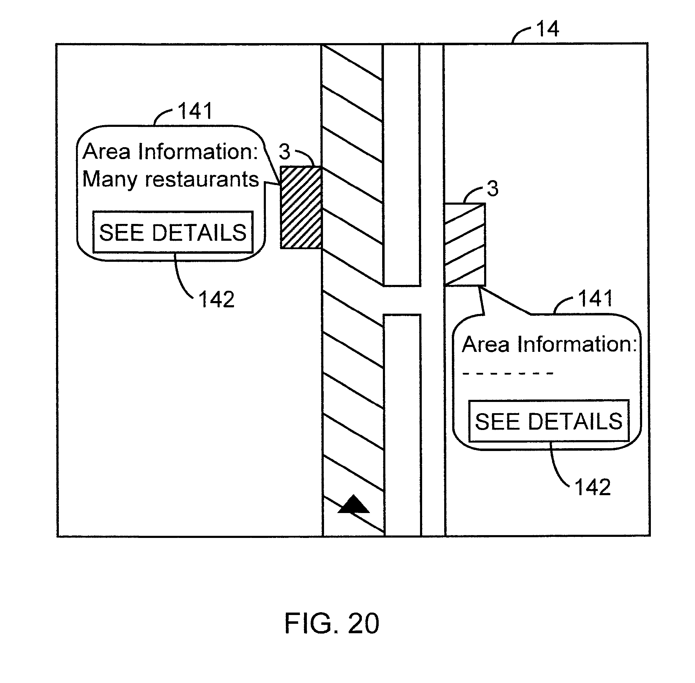

FIG. 20 is a diagram illustrating an example of a screen image of a displayed area according to a second embodiment of the present invention. The CPU 11 displays the candidate area, on the left side of the screen of the display unit 14, determined as the area to be introduced in the first embodiment and the auxiliary candidate area, on the right side of the screen, determined as the area to be introduced in the second embodiment. The CPU 11 colors and displays the left area 3 adjacent to the hatched road on the route and displays the balloon box 141 containing introduction data read from the area data file 152 and the "SEE DETAILS" button 142. The CPU 11 also colors and displays the right area 3 lying apart from the hatched road on the route within a given distance and displays the balloon box 141 containing introduction data read from the auxiliary area data file 155 and the "SEE DETAILS" button 142. The CPU 11 displays the left area 3 and the right area 3 so that the color density of the left area 3 is higher than the color density of the right area 3, as illustrated in FIG. 20.
Thus, the area 3 lying apart from the road on the route other than the area 3 that is adjacent to the road on the route may be also proposed to a user as an area to be introduced. Since the distant areas 3 are determined in accordance with the auxiliary reference time, the number of areas to be introduced may be prevented from increasing greatly. Since the adjacent areas 3 and the distant areas 3 are visually distinguished from each other, area recommendation may be proposed more efficiently.

The second embodiment is as discussed above. Since the other parts of the second embodiment are similar to the first embodiment, like numerals are assigned to like components, and the detailed discussion is omitted here.

### Third Embodiment

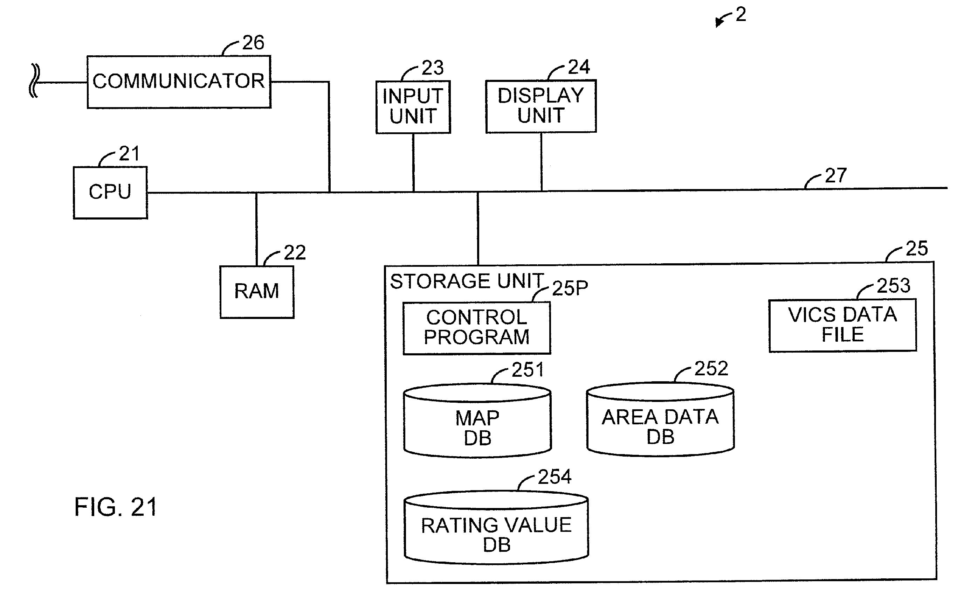

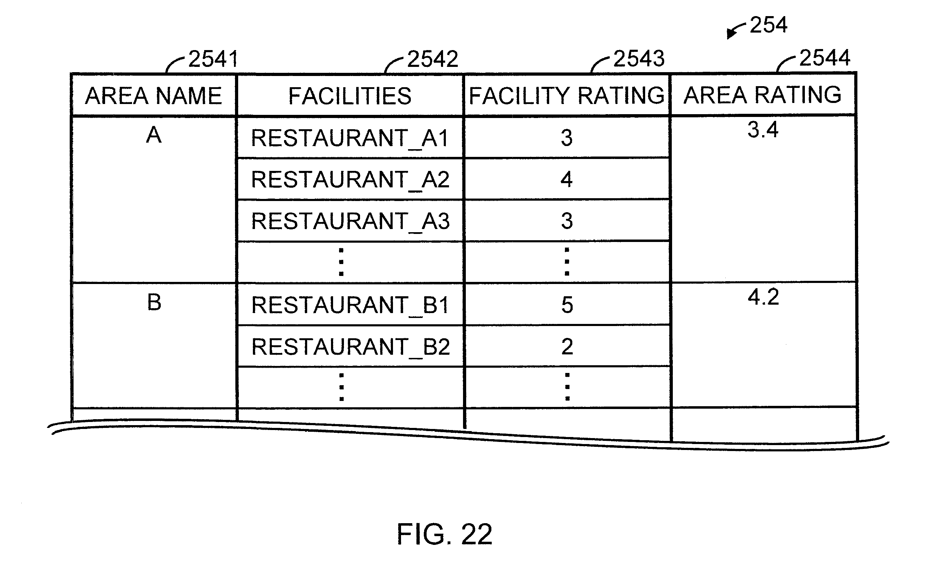

In a third embodiment of the present invention, an area to be introduced is determined in accordance with a transit time and a rating value for an area 3. FIG. 21 is a block diagram illustrating an example of a hardware configuration of a server computer according to a third embodiment of the present invention. In addition to the hardware configuration according to the first embodiment illustrated in FIG. 3, the server computer 2 according to the third embodiment further includes a rating value DB 254 in the storage unit 25. FIG. 22 is a diagram illustrating an example of data configuration of a rating value DB according to a third embodiment of the present invention. The rating value DB 254 stores a rating value for each area 3. A rating value indicates a degree of a rating for the area 3. Rating values may be collected from users and include five levels of ratings, for example. In the third embodiment, it is assumed that a rating value takes a value ranging from 1 to 5, and that a larger value indicates a higher rating.

The rating value DB 254 includes an area name field 2541, a facilities field 2542, a facility rating field 2543, and an area rating field 2544. The area name field 2541 stores an area name of an area 3. The facilities field 2542 stores information on facilities such as restaurants sited in the area 3. The facility rating field 2543 stores a facility rating value assigned to each facility. An operator may input an appropriate facility rating value via, for example, the input unit 23 to store the facility rating value in the rating value DB 254. The facility rating value for a restaurant, for example, may be a comprehensive value considering a rating for the taste, a rating for the service, and a rating for the price and the like by users or markers.

The area rating field 2544 stores an area rating value for each area 3. The area rating value may be an average of facility rating values assigned to individual facilities sited in the area 3, for example. The CPU 21 may read a facility rating value for each area 3, obtain an area rating value by dividing a total of the facility rating values by the number of facilities, and store the area rating value in the rating value DB 254. In an example illustrated in FIG. 22, an area rating value for an area name "A" is 3.4, and an area rating value for an area name "B" is 4.2.

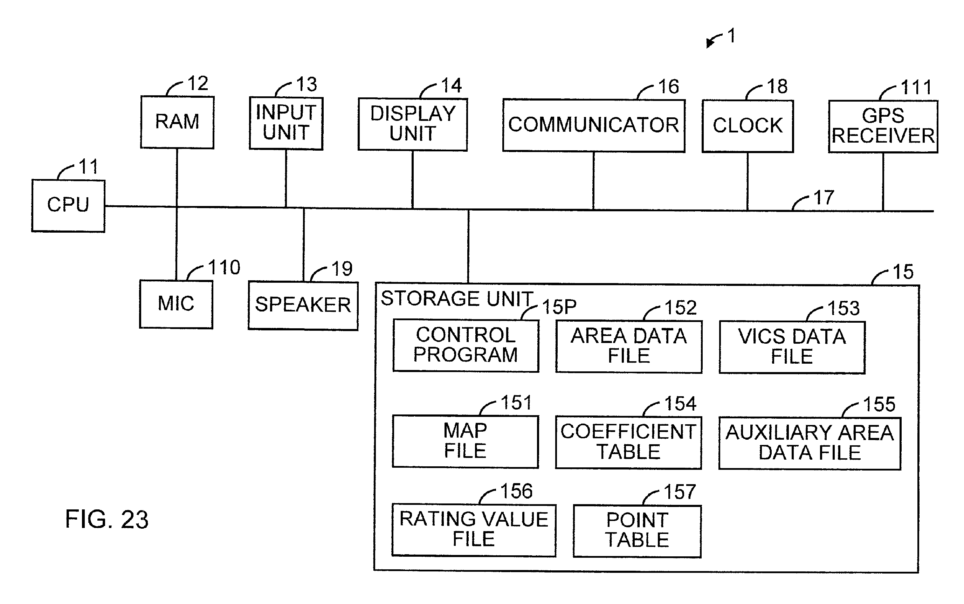

FIG. 23 is a block diagram illustrating an example of a hardware configuration of a cellular phone according to a third embodiment of the present invention. In addition to the hardware configuration according to the second embodiment, a rating value file 156 and a point table 157 are provided in the storage unit 15.

The CPU 11 of the cellular phone 1 reads data on a candidate area adjacent to the road on the route, which has been discussed in the first embodiment. The CPU 11 also reads data on an auxiliary candidate area adjacent to nodes and links lying apart from the route within a given distance, which has been discussed in the second embodiment. The CPU 11 sends data on the candidate areas (including auxiliary candidate areas) to the server computer 2. The CPU 21 of the server computer 2 reads rating values corresponding to the received candidate areas from the rating value DB 254. The CPU 21 sends the read rating values to the cellular phone 1. The CPU 11 of the cellular phone 1 receives the rating values for the candidate areas from the server computer 2 and stores the rating values for the candidate areas in the rating value file 156. Thus, the rating values for the candidate areas are stored in the rating value file 156 separately for the individual candidate areas.

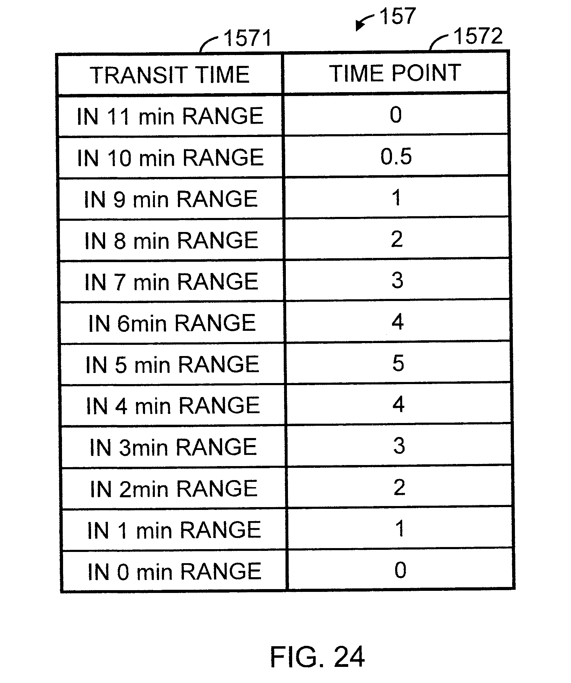

FIG. 24 is a diagram illustrating an example of data configuration of a point table according to a third embodiment of the present invention. The point table 157 includes a transit time field 1571 and a time point field 1572. The point table 157 stores a time point in association with transit time discussed in the first embodiment. For example, a point of 5 is stored in the time point field as a time point given for a transit time in the five minute range. The time point decreases as the transit time increases or decreases from five minutes. For example, the time point of 3 is given for a transit time in the seven minute range, and the time point of 2 is given for a transit time in the two minute range. As discussed in the first embodiment, no time point is given when the given reference time stored in the storage unit 15 is exceeded. As the reference time ranges from one minute to ten minutes in the first embodiment, the time point of 0 is given for a transit time in the eleven minute range and in the zero minute range.

Upon calculating a transit time for a candidate area (or auxiliary candidate area), the CPU 11 reads a time point corresponding to the calculated transit time from the point table 157. The CPU 11 adds the rating value for the candidate area to the read time point to calculate a total point. For example, when the transit time of the candidate area is three minutes and the rating value for the candidate area is 3.4, a total point of 6.4 is obtained by adding a rating value of 3.4 to a time point of 3 to be given for the transit time of three minutes. When the obtained total point exceeds a given reference point stored in the storage unit 15, the CPU 11 determines the candidate area as an area to be introduced. In the third embodiment, it is assumed, but not limited to, that the candidate area is determined as an area to be introduced, in accordance with the time point and the rating value. Alternatively, the candidate area may be determined as an area to be introduced, when the rating value exceeds the given reference point without considering the time point.

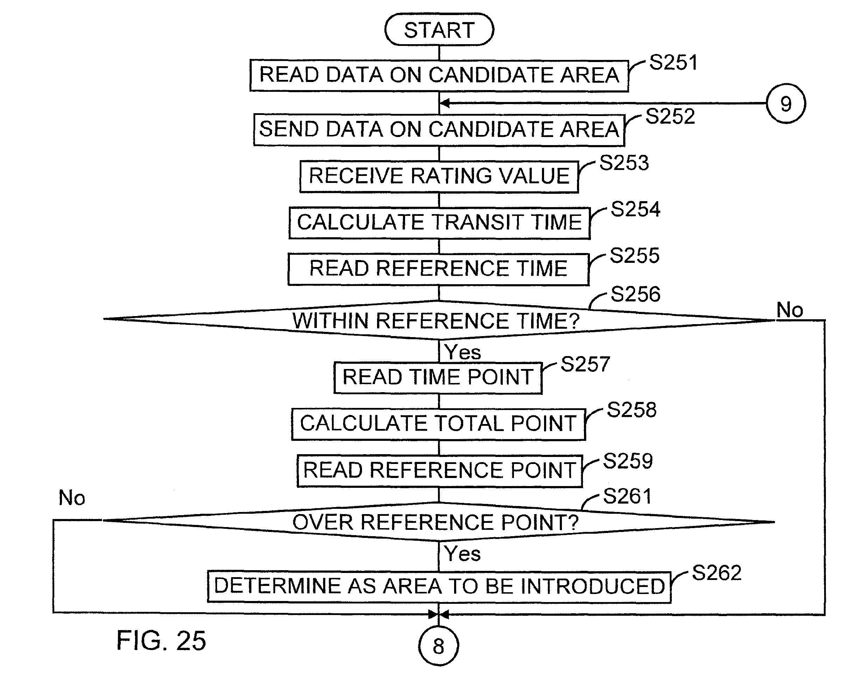

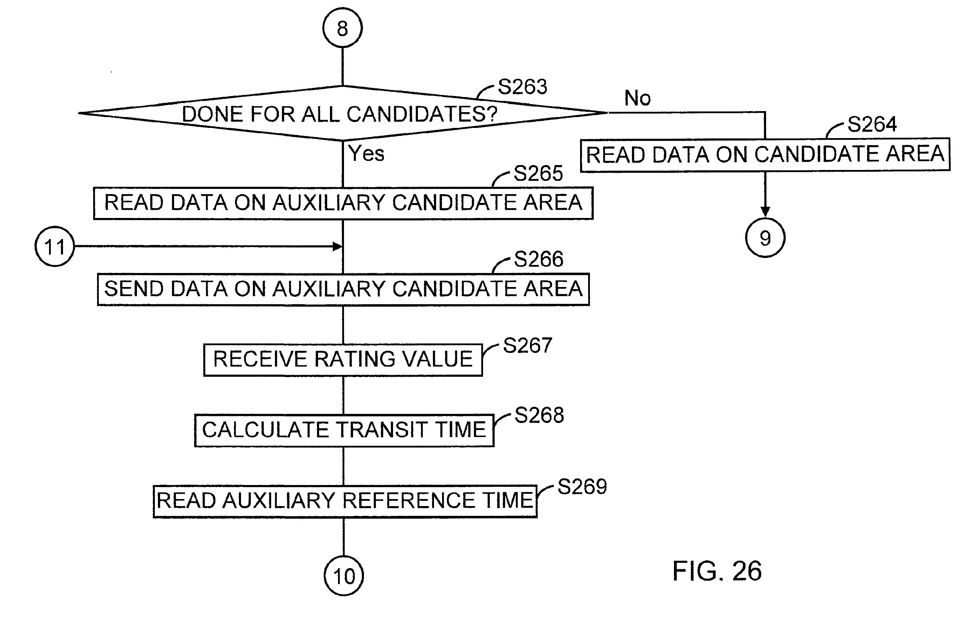

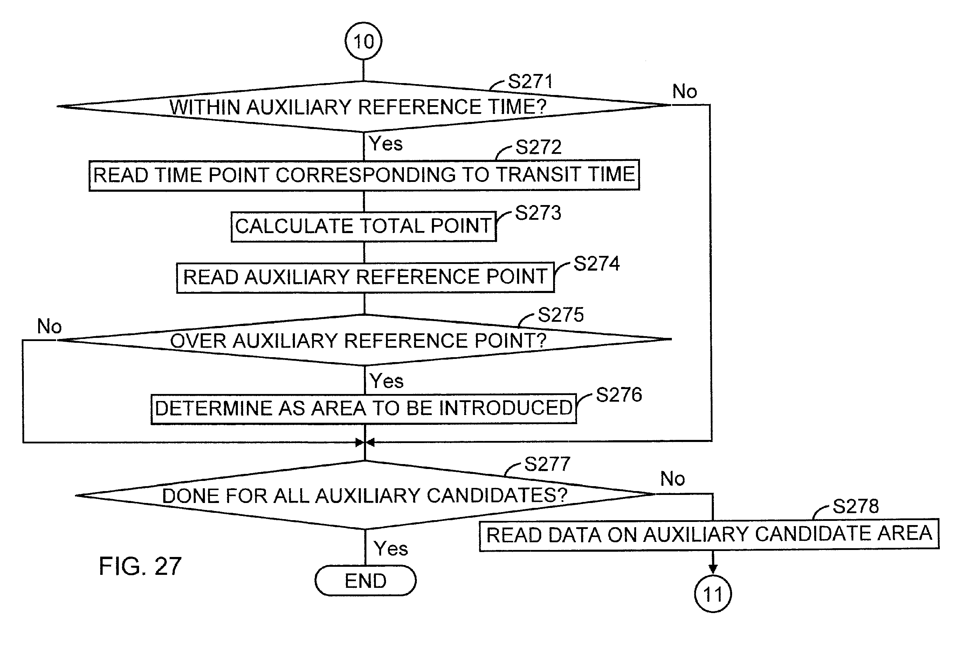

FIGs. 25 to 27 are operation charts illustrating an operation flow of an example of a process for determining a candidate area and an auxiliary candidate area as an area to be introduced according to a third embodiment of the present invention.
In operation S251, the CPU 11 of the cellular phone 1 reads data on a candidate area adjacent to a road on the route from the storage unit 15 by the operations discussed in the first embodiment.
In operation S252, the CPU 11 sends the read data on the candidate area to the server computer 2.
In operation S253, the CPU 21 of the server computer 2 receives the sent data on the candidate area via the communicator 26. The CPU 21 reads a rating value corresponding to the candidate area with reference to the rating value DB 254. The CPU 21 sends the read rating value to the cellular phone 1. The CPU 11 of the cellular phone 1 receives the rating value for the candidate area received via the communicator 16. The CPU 11 stores the received rating value in the rating value file 156, in association with the candidate area.

In operation S254, the CPU 11 calculates the transit time for the candidate area, as discussed in operation S116 in the first embodiment.
In operation S255, the CPU 11 reads the reference time from the storage unit 15.
In operation S256, the CPU 11 determines whether the calculated transit time for the candidate area falls within the range of the reference time. When the CPU 11 determines that the transit time does not fall within the range of the reference time ("No" in operation S256), the candidate area is not suitable as an area to be introduced. Thus, the process proceeds to operation S263.

In operation S257, when the CPU 11 determines that the transit time falls within the range of the reference time ("Yes" in operation S256), the CPU 11 reads a time point corresponding to the transit time from the point table 157.
In operation S258, the CPU 11 calculates a total point in accordance with the rating value received in operation S253 and the time point read in operation S257. The total point may be calculated by adding the rating value to the time point as discussed above. Alternatively, the total point may be calculated by, for example, multiplying the time point by the rating value.
In operation S259, the CPU 11 reads a given reference point stored in the storage unit 15.

In operation S261, the CPU 11 determines whether the total point exceeds the given reference point. When CPU 11 determines that the total point does not exceed the reference point ("No" in operation S261), the process proceeds to operation S263.
In operation S262, when CPU 11 determines that the total point exceeds the reference point ("Yes" in operation S261), the CPU 11 determines the candidate area as an area to be introduced. Data on the area to be introduced is stored in the storage unit 15.
In operation S263, the CPU 11 determines whether all of the candidate areas on the route have been processed.

In operation S264, when the CPU 11 determines that some of the candidate areas on the route have not been processed ("No" in operation S263), the CPU 11 reads data on a different candidate area on the route from the storage unit 15. The process returns to operation S252 so as to perform similar operations on the different candidate area.
In operation S265, when the CPU 11 determines that all of the candidate areas on the route have been processed ("Yes" in operation S263), the CPU 11 reads, from the auxiliary area data file 155, data on an auxiliary candidate area adjacent to nodes and links lying apart from the route within a given distance. Since this operation is as discussed in the second embodiment, the detailed discussion is omitted here.

In operation S266, the CPU 11 sends the read data on the auxiliary candidate area to the server computer 2.
In operation S267, the CPU 21 of the server computer 2 receives the sent data on the auxiliary candidate area via the communicator 26. The CPU 21 reads a rating value corresponding to the auxiliary candidate area with reference to the rating value DB 254. The CPU 21 sends the read rating value to the cellular phone 1. The CPU 11 of the cellular phone 1 receives the rating value for the auxiliary candidate area received via the communicator 16. The CPU 11 stores the received rating value in the rating value file 156, in association with the auxiliary candidate area.

In operation S268, the CPU 11 calculates the transit time of the auxiliary candidate area, as discussed in operation S196 in the second embodiment.
In operation S269, the CPU 11 reads the auxiliary reference time from the storage unit 15. In this case, the time range of the auxiliary reference time may preferably be shorter than the time range of the reference time.
In operation S271, the CPU 11 determines whether the calculated transit time of the auxiliary candidate area falls within the range of the auxiliary reference time. When the CPU 11 determines that the transit time does not fall within the range of the auxiliary reference time ("No" in operation S271), the auxiliary candidate area is not suitable as an area to be introduced. Thus, the process proceeds to operation S277.

In operation S272, when the CPU 11 determines that the transit time falls within the range of the auxiliary reference time ("Yes" in operation S271), the CPU 11 reads a time point corresponding to the transit time from the point table 157.
In operation S273, the CPU 11 calculates a total point in accordance with the rating value received in operation S267 and the time point read in operation S272.
In operation S274, the CPU 11 reads a given auxiliary reference point stored in the storage unit 15. The auxiliary reference point may be larger than the reference point so as to give a higher priority to a candidate area on the route than to an auxiliary candidate area adjacent to nodes and links, other than those on the route, lying apart from the route within a given distance.

In operation S275, the CPU 11 determines whether the total point exceeds the auxiliary reference point. When CPU 11 determines that the total point does not exceed the auxiliary reference point ("No" in operation S275), the process proceeds to operation S277.
In operation S276, when CPU 11 determines that the total point exceeds the auxiliary reference point ("Yes" in operation S275), the CPU 11 determines the auxiliary candidate area as an area to be introduced and stores data on the area to be introduced in the storage unit 15.
In operation S277, the CPU 11 determines whether all of the auxiliary candidate areas adjacent to the nodes and links lying apart from the route within the given distance have been processed. When the CPU 11 determines that all of the auxiliary candidate areas have been processed ("Yes" in operation S277), the CPU 11 completes the sequence of operations.

In operation S278, when the CPU 11 determines that some of the auxiliary candidate areas have not been processed ("No" in operation S277), the CPU 11 reads, from the storage unit 15, data on a different auxiliary candidate area adjacent to the nodes and links lying apart from the route within the given distance. The process returns to operation S266 so as to perform similar operations on the different auxiliary candidate area.
Thus, an area to be introduced suitable for a user may be provided in accordance with rating values for the areas 3. Moreover, an area to be introduced may be determined in accordance with the transit time and the rating value, so that an appropriate area 3 may be determined as an area to be introduced, considering both the transit time and the rating value. Moreover, since the time range of the reference time is longer than the time range of the auxiliary reference time, and the reference point is lower than the auxiliary reference point, an area 3 on the route may be selected with a priority higher than that of an area 3 lying apart from the route.

The third embodiment is as discussed above. Since the other parts of the third embodiment are similar to the second embodiment, like reference numerals are assigned to like components, and the detailed discussion is omitted here.

### Fourth Embodiment

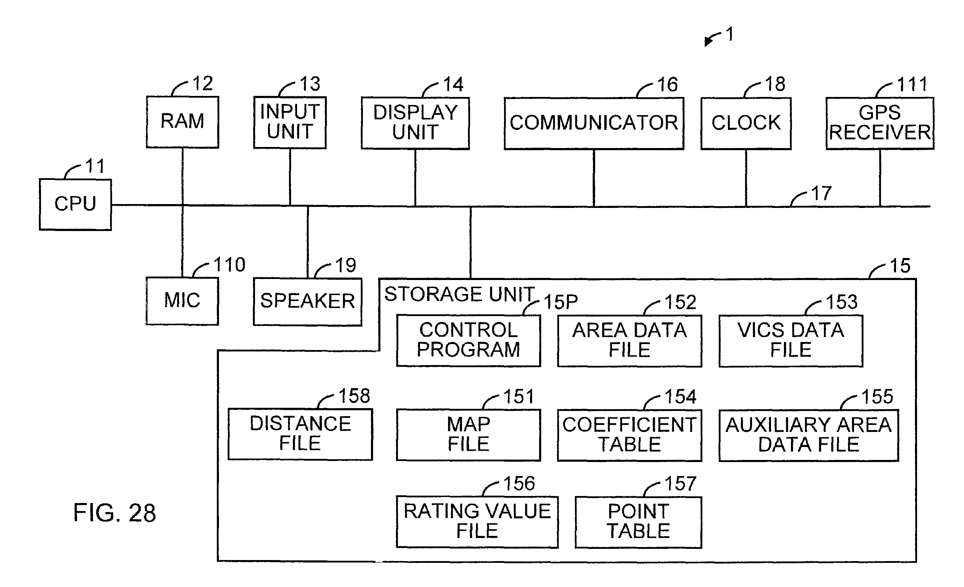

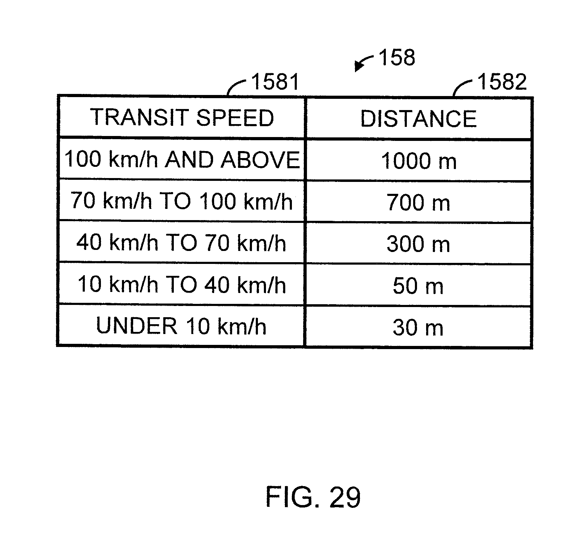

In a fourth embodiment of the present invention, an area to be introduced is selected in accordance with a transit speed. FIG. 28 is a block diagram illustrating an example of a hardware configuration of a cellular phone according to a fourth embodiment of the present invention. In addition to the hardware configuration according to the third embodiment illustrated in FIG. 23, a distance file 158 is provided in the storage unit 15. FIG. 29 is a diagram illustrating an example of data configuration of a distance file according to a fourth embodiment of the present invention. The distance file 158 includes a transit speed field 1581 and a distance field 1582. In the distance file 158, distances stored in the distance field 1582, which is used when selecting areas to be introduced, are associated with transit speeds stored in the transit speed field 1581. The value of the distance stored in the distance file 158 increases as the corresponding transit speed increases.

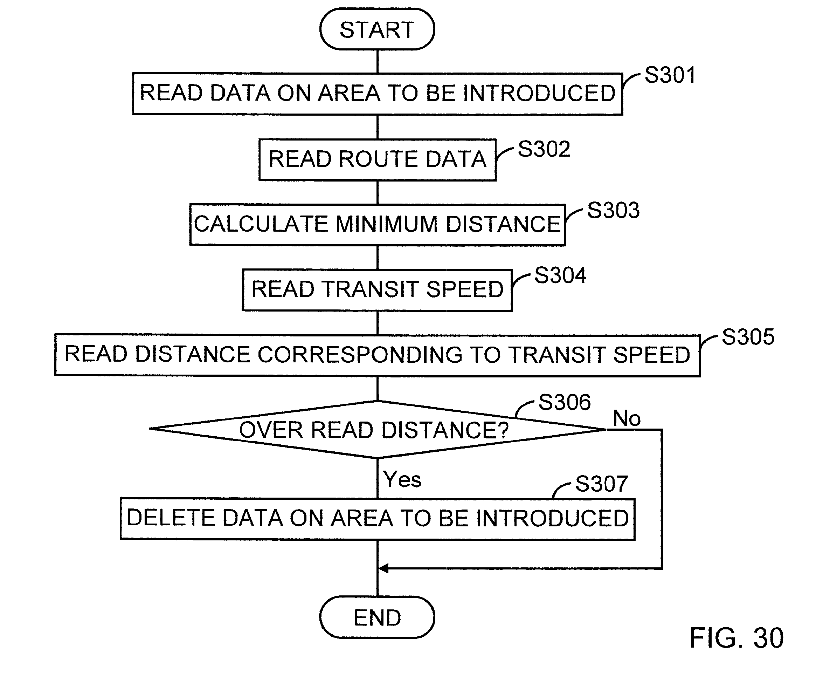

FIG. 30 is an operation chart illustrating an operation flow of an example of a process for deleting an area to be introduced according to a fourth embodiment of the present invention. The CPU 11 re-adjusts areas 3 determined as areas to be introduced in operation S199 in the second embodiment in accordance with magnitude of the transit speed.
In operation S301, the CPU 11 reads data on an area to be introduced stored in the storage unit 15 in operation S1911.
In operation S302, the CPU 11 of the cellular phone 1 reads, from the storage unit 15, the route data of the route which has been found by the server computer 2 in operation S86 discussed in the first embodiment and sent to the cellular phone 1.
In operation S303, the CPU 11 calculates the minimum distance between nodes and links on the route and the area to be introduced with reference to the map file 151. For example, the CPU 11 may calculate distances between a plurality of coordinates (the latitude and longitude) assigned to the nodes and links neighboring the area to be introduced and a plurality of coordinates (the latitude and longitude) assigned to the area to be introduced to determine a distance of the smallest value, out of the calculated distances, as the minimum distance.

In operation S304, the CPU 11 reads the transit speed calculated in operation S194 from the storage unit 15.
In operation S305, the CPU 11 reads a distance corresponding to the transit speed from the distance file 158.
In operation S306, the CPU 11 determines whether the minimum distance exceeds the read distance. When the CPU 11 determines that the minimum distance does not exceed the read distance ("No" in operation S306), the process proceeds to operation S1912 to perform operations for the area to be introduced.
In operation S307, when the CPU 11 determines that the minimum distance exceeds the read distance ("Yes" in operation S306), the CPU 11 deletes data on the area to be introduced from the storage unit 15 so as to exclude the area 3 from among areas to be introduced.
When the transit speed is high, for example, in the middle of moving by a vehicle, the area 3 is determined as an area to be introduced because, even when the area 3 is a rather distant area, the area 3 may be readily accessed. On the other hand, when the transit speed is low, it is highly probable that the user of the cellular phone 1 is walking. In this case, introduction to the distant area 3 is deleted by the above-discussed operations. Thus, Introduction to the areas 3 may be performed in accordance with the status of the user of the cellular phone 1, as discussed above.

The fourth embodiment is as discussed above. Since the other parts of the fourth embodiment are similar to the third embodiments, like reference numerals are assigned to like components, and the detailed discussion is omitted here.

### Fifth Embodiment

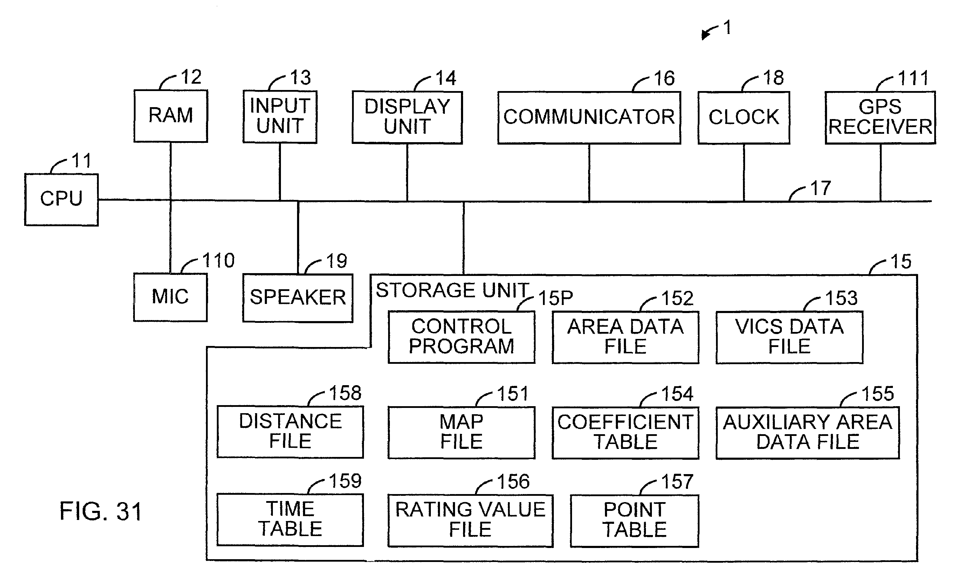

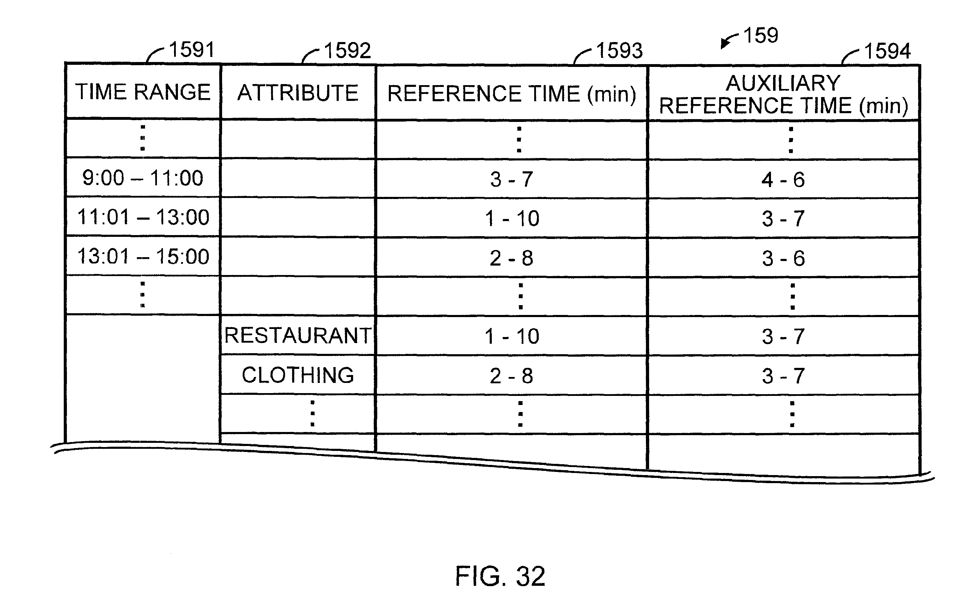

In a fifth embodiment of the present invention, the reference time or the auxiliary reference time is given for each time range or each of the attributes of the areas 3. FIG. 31 is a block diagram illustrating an example of a hardware configuration of a cellular phone according to a fifth embodiment of the present invention. In addition to the hardware configuration according to the fourth embodiment illustrated in FIG. 28, a time table 159 is provided in the storage unit 15. FIG. 32 is a diagram illustrating an example of data configuration of a time table according to a fifth embodiment of the present invention. The time table 159 includes a time range field 1591, an attribute field 1592, a reference time field 1593, and an auxiliary reference time field 1594. The time table 159 stores reference times and auxiliary reference times for determining an area 3 as an area to be introduced, in association with time ranges or attributes. The time range field 1591 stores data of time ranges used when determining an area 3 as an area to be introduced. The reference time field 1593 stores data of a range of each reference time. For example, since usage frequency of an area 3 is expected to be higher in a time range in the daytime than in the early morning, the range of reference time for a time range from 11:01 to 13:00 may be wider.

Similarly, the auxiliary reference time field 1594 stores auxiliary reference time for each time range. As discussed above, the range of auxiliary reference time may be smaller than the range of reference time. The attribute field 1592 stores attribute data for an attribute assigned in advance to each area 3. An attribute is, for example, a restaurant or a clothing store. Since user needs for the areas 3 vary with the attributes, different reference times and different auxiliary reference times are stored for the individual attributes. In the fifth embodiment, it is assumed that the reference time and the auxiliary reference time are defined in accordance with both the time range and the attribute. When both reference times based on the time range and the attribute, respectively, are used, the lower limit of the reference time maybe an average of lower limits of both reference times and the upper limit of the reference time maybe an average of upper limits of both reference times. Alternatively, the reference time and the auxiliary reference time according to a reference time based on either one of the time range and the attribute may be used.

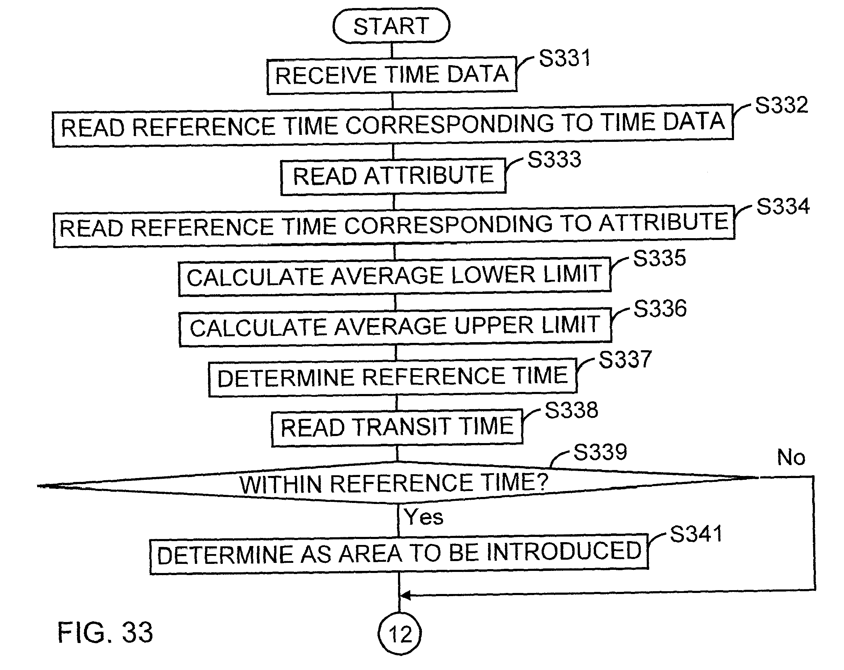

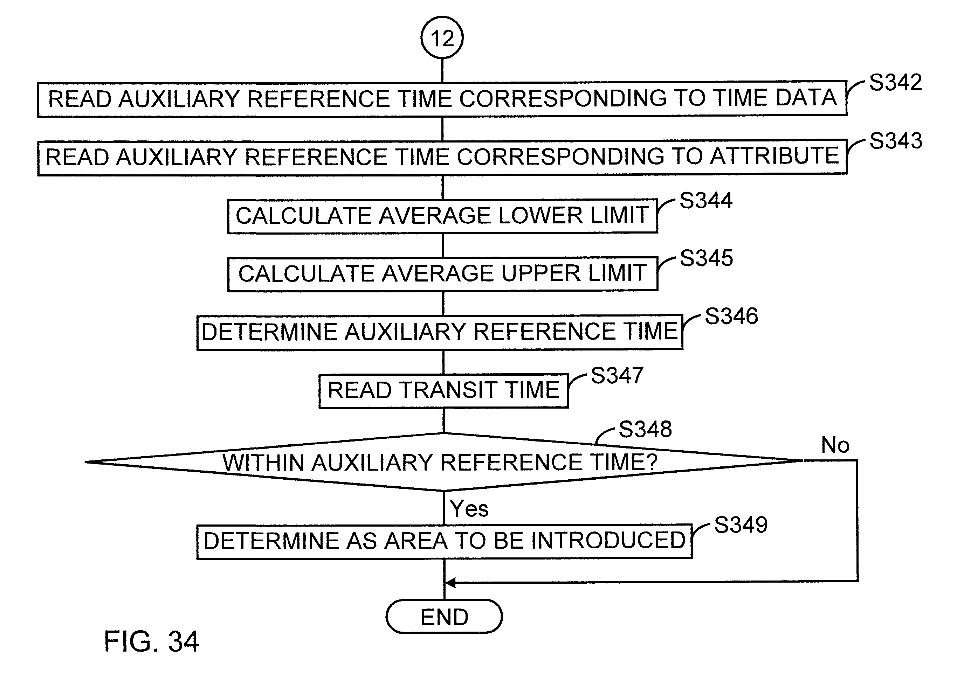

FIGs. 33 and 34 are operation charts illustrating an operation flow of an example of a process for determining a candidate area and an auxiliary candidate area as an area to be introduced according to a fifth embodiment of the present invention. After the operation S116 discussed in the first embodiment, the following operations are performed.
In operation S331, the CPU 11 receives time data output from the clock 18.
In operation S332, the CPU 11 reads reference time for a time range corresponding to the time data from the time table 159.
In operation S333, the CPU 11 reads the attribute of the candidate area from the area data file 152.
In operation S334, the CPU 11 reads reference time corresponding to the attribute of the candidate area from the time table 159.

In operation S335, the CPU 11 calculates the average of the lower limit of the reference time read in operation S332 and the lower limit of the reference time read in operation S334.
In operation S336, the CPU 11 calculates the average of the upper limit of the reference time read in operation S332 and the upper limit of the reference time read in operation S334.
In operation S337, the CPU 11 determines the reference time in accordance with the average of the lower limits calculated in operation S335 and the average of the upper limits calculated in operation S336. That is, the reference time takes a value ranging from the average of the lower limits to the average of the upper limits.

In operation S338, the CPU 11 reads the transit time calculated in operation S116.
In operation S339, the CPU 11 determines whether the transit time falls within the range of the reference time. When the CPU 11 determines that the transit time does not fall within the range of the reference time ("No" in operation S339), the process proceeds to operation S342.
In operation S341, when the CPU 11 determines that the transit time falls within the range of the reference time ("Yes" in operation S339), the CPU 11 determines the candidate area as an area to be introduced.

the CPU 11 performs process for an auxiliary candidate area lying apart from the route within a given distance.
In operation S342, after operation S196 discussed in the second embodiment, the CPU 11 reads auxiliary reference time for the time range corresponding to the time data from the time table 159.
In operation S343, the CPU 11 reads auxiliary reference time corresponding to the attribute of the auxiliary candidate area from the time table 159.
In operation S344, the CPU 11 calculates the average of the lower limit of the auxiliary reference time read in operation S342 and the lower limit of the auxiliary reference time read in operation S343.
In operation S345, the CPU 11 calculates the average of the upper limit of the auxiliary reference time read in operation S342 and the upper limit of the auxiliary reference time read in operation S343.
In operation S346, the CPU 11 determines the auxiliary reference time in accordance with the average of the lower limits calculated in operation S344 and the average of the upper limits calculated in operation S345. That is, the auxiliary reference time takes a value ranging from the average of the lower limits to the average of the upper limits.

In operation S347, the CPU 11 reads the transit time calculated in operation S196.
In operation S348, the CPU 11 determines whether the transit time falls within the range of the auxiliary reference time. When the CPU 11 determines that the transit time does not fall within the range of the auxiliary reference time ("No" in operation S348), the CPU 11 completes the operations.
In operation S349, when the CPU 11 determines that the transit time falls within the range of the auxiliary reference time ("Yes" in operation S348), the CPU 11 determines the auxiliary candidate area as an area to be introduced.
Since the reference time and the auxiliary reference time varies in accordance with the time range and the attribute of an area 3, an appropriate introduction may be provided timely and in response to the attribute of the area.

The fifth embodiment is as discussed above. Since the other parts of the fifth embodiment are similar to the fourth embodiments, like reference numerals are assigned to like components, and the detailed discussion is omitted here.

### Sixth Embodiment

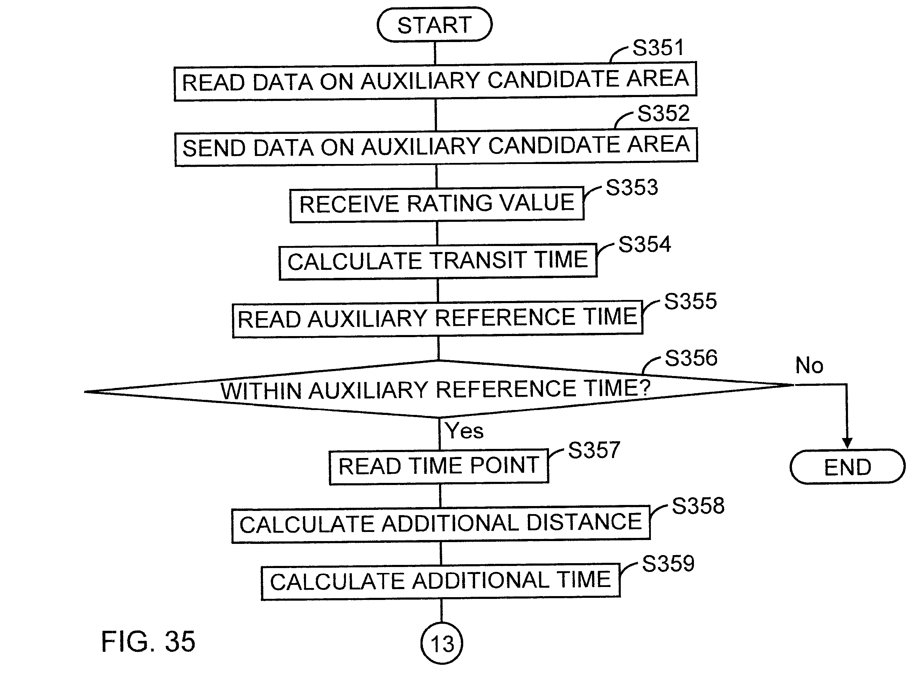

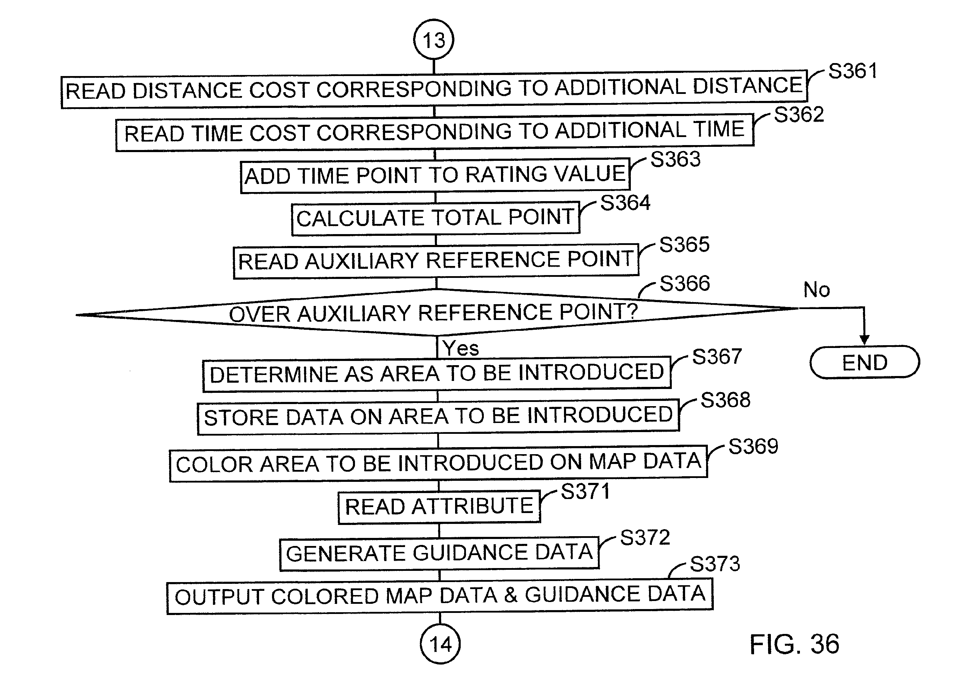

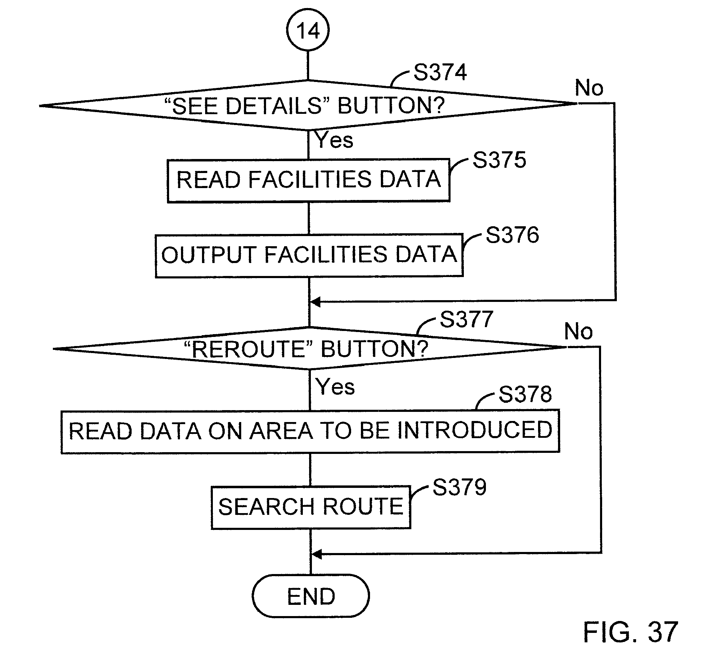

In a sixth embodiment of the present invention, an auxiliary candidate area lying apart from the route is determined as an area to be introduced, in accordance with a cost and a rating value. FIGs. 35 to 37 are operation charts illustrating an operation flow of an example of a process for determining an auxiliary candidate area as an area to be introduced according to a sixth embodiment of the present invention.
In operation S351, the CPU 11 reads data on an auxiliary candidate area from the auxiliary area data file 155, as discussed in the second embodiment.
In operation S352, the CPU 11 sends the read data on the auxiliary candidate area to the server computer 2.
In operation S353, the CPU 21 of the server computer 2 receives the sent data on the auxiliary candidate area via the communicator 26. The CPU 21 reads a rating value corresponding to the auxiliary candidate area with reference to the rating value DB 254. The CPU 21 sends the read rating value to the cellular phone 1. The CPU 11 of the cellular phone 1 receives the rating value for the auxiliary candidate area via the communicator 16. The CPU 11 stores the received rating value in the rating value file 156, in association with the auxiliary candidate area.

In operation S354, the CPU 11 calculates the transit time of the auxiliary candidate area, as discussed in operation S196 in the second embodiment.
In operation S355, the CPU 11 reads the auxiliary reference time from the storage unit 15.
In operation S356, the CPU 11 determines whether the calculated transit time of the auxiliary candidate area falls within the range of the auxiliary reference time. When the CPU 11 determines that the transit time does not fall within the range of the auxiliary reference time ("No" in operation S356), the auxiliary candidate area is not suitable as an area to be introduced, and thus the CPU 11 completes the process.

In operation S357, when the CPU 11 determines that the transit time falls within the range of the auxiliary reference time ("Yes" in operation S356), the CPU 11 reads a time point corresponding to the transit time from the point table 157.
In operation S358, the CPU 11 calculates an additional distance for a detour via the auxiliary candidate area lying apart from the route found in the first embodiment. Specifically, the CPU 11 calculates an additional distance by, for example, adding up distances assigned to new nodes and links lying on a route when the detour via the auxiliary candidate area is made.
In operation S359, the CPU 11 calculates additional time for the detour via the auxiliary candidate area. Specifically, the CPU 11 reads the transit speed calculated in operation S194 in the second embodiment. Then, the CPU 11 calculates the additional time by dividing the additional distance calculated in operation S358 by the transit speed.

In operation S361, the CPU 11 reads distance cost corresponding to the additional distance with reference to the storage unit 15. The storage unit 15 stores a distance cost the value of which increases as the additional distance increases. For example, the storage unit 15 stores a distance cost "0.1" for additional 1 km and a distance cost "0.2" for additional 2 km.
In operation S362, similarly, the CPU 11 reads time cost corresponding to the calculated additional time from the storage unit 15. The storage unit 15 stores a time cost the value of which increases as the additional time increases. For example, the storage unit 15 stores a time cost "0.1" for additional one minute and a time cost "0.2" for additional two minutes.

In operation S363, the CPU 11 adds the time point read in operation S357 to the rating value received in operation S353.
In operation S364, the CPU 11 calculates a total point by subtracting the read distance cost and time cost from the sum of the time point and the rating value. That is, the auxiliary candidate area is determined as an area to be introduced, when the rating value is high, the transit time based on the transit speed is appropriate, and the cost for the detour is low. Alternatively, the storage unit 15 may store a coefficient the value of which decreases as the additional distance increases and a coefficient the value of which decreases as the additional time increases, and the CPU 11 may multiply the sum in operation S363 by these coefficients to calculate a total point.
In operation S365, the CPU 11 reads the given auxiliary reference point stored in the storage unit 15. An appropriate value as the auxiliary reference point may be input by a user from the input unit 13 to be stored in the storage unit 15.

In operation S366, the CPU 11 determines whether the total point exceeds the auxiliary reference point. When CPU 11 determines that the total point does not exceed the auxiliary reference point ("No" in operation S366), the auxiliary candidate area is not suitable as an area to be introduced, and thus the CPU 11 completes the process.
In operation S367, when CPU 11 determines that the total point exceeds the auxiliary reference point ("Yes" in operation S366), the CPU 11 determines the auxiliary candidate area as an area to be introduced.
In operation S368, the CPU 11 stores data on the area to be introduced in the storage unit 15.

In operation S369, the CPU 11 performs coloring, to color the area to be introduced, on the map data with a given color stored in the storage unit 15 with reference to the location data of the area to be introduced stored in the auxiliary area data file 155. The CPU 11 performs coloring in operation S369, with a color different from a color with which coloring is performed in operation S122.
In operation S371, the CPU 11 reads an attribute corresponding to the area to be introduced from the auxiliary area data file 155.
In operation S372, the CPU 11 generates introduction data including the read attribute, an area name, the "SEE DETAILS" button 142, and a "REROUTE" button.
In operation S373, the CPU 11 outputs the colored map data and the generated introduction data to the display unit 14.

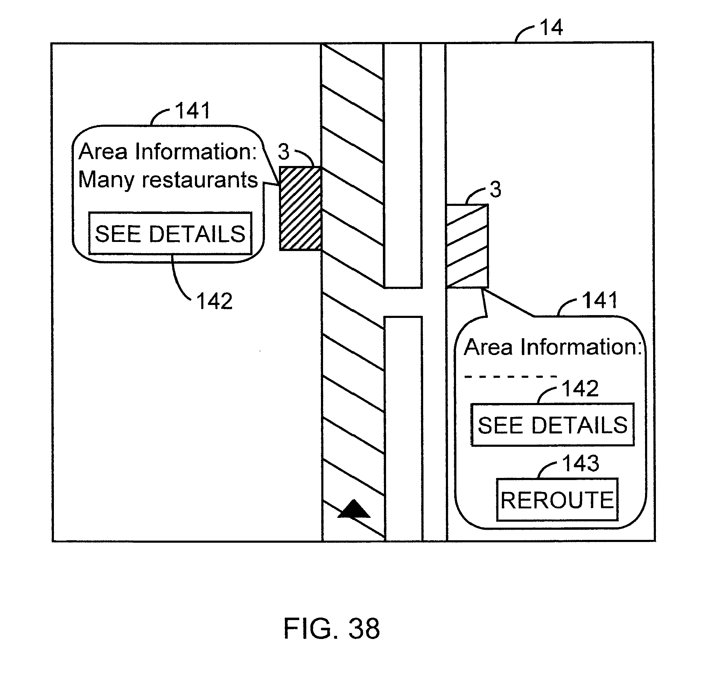

FIG. 38 is a diagram illustrating an example of a screen image of a displayed area according to a sixth embodiment of the present invention. The CPU 11 displays the balloon box 141 in the neighborhood of the right area 3 lying apart from the route. The balloon box 141 contains introduction data including the area name, the "SEE DETAILS" button 142, and the "REROUTE" button 143.
In operation S374, the CPU 11 determines whether input on the "SEE DETAILS" button 142 has been received. When the CPU 11 determines that input on the "SEE DETAILS" button 142 has not been received via the input unit 13 ("No" in operation S374), the process proceeds to operation S377.
In operation S375, when the CPU 11 determines that input on the "SEE DETAILS" button 142 has been received ("Yes" in operation S374), the CPU 11 reads, from the auxiliary area data file 155, facilities data corresponding to the right area 3.

In operation S376, the CPU 11 outputs the read facilities data to the display unit 14.
In operation S377, the CPU 11 determines whether input on the "REROUTE" button 143 has been received via the input unit 13. When the CPU 11 determines that input on the "REROUTE" button 143 has not been received ("No" in operation S377), the CPU 11 completes the process.
In operation S378, when the CPU 11 determines that input on the "REROUTE" button 143 has been received ("Yes" in operation S377), the CPU 11 reads data on the area to be introduced stored in operation S368 from the storage unit 15.
In operation S379, the CPU 11 again performs route search, specifying the right area 3 as a stopover, and then completes the process.

Route search in which the right area 3 is specified as a stopover may be performed by the server computer 2. In this case, the CPU 11 may send the coordinates (the latitude and longitude) of current location of the vehicle, data on the right area 3 to be set as a stopover, and data on the final destination to the server computer 2. The CPU 21 of the server computer 2 may invoke the control program 25P for performing route search. Then, the CPU 21 may perform route search in accordance with the coordinates (the latitude and longitude) of current location of the vehicle, the data on the right area 3 to be set as a stopover, and the data on the final destination, which have been sent. The CPU 21 may send a result of route search to the cellular phone 1. Thus, when an area 3 lying apart from a current route is recommended, the recommendation is performed, comprehensively considering the transit time, the additional cost, and the rating value. Thus, an appropriate area may be provided to a user, as an area to be introduced.

The sixth embodiment is as discussed above. Since the other parts of the sixth embodiment are similar to the fifth embodiment, like reference numerals are assigned to like components, and the detailed discussion is omitted here.

### Seventh Embodiment

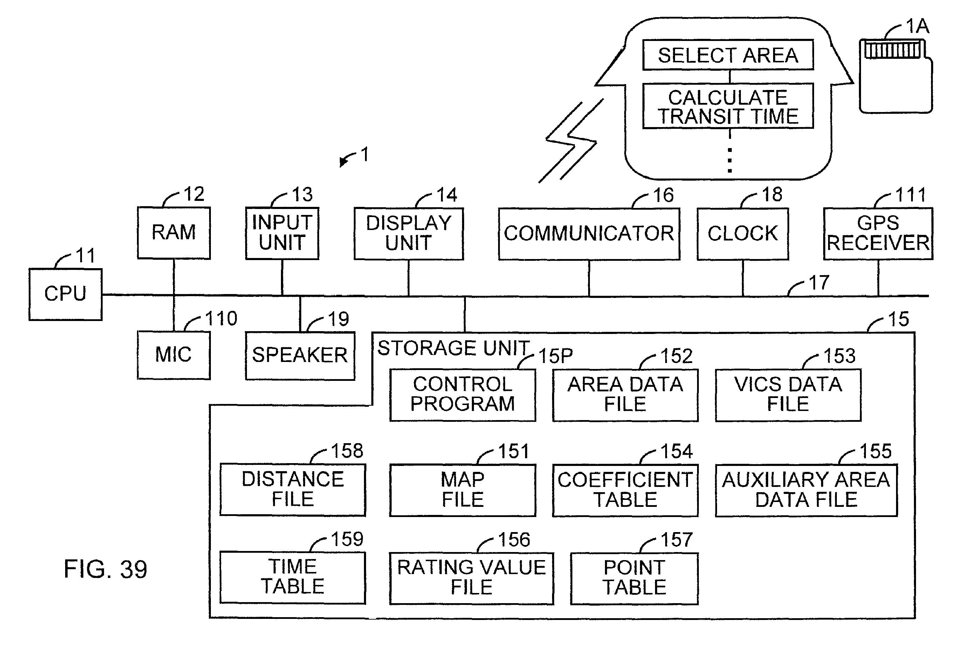

FIG. 39 is a block diagram illustrating an example of a hardware configuration of a cellular phone according to a seventh embodiment of the present invention. A program for causing the cellular phone 1 according to any one of the first to sixth embodiments to operate may be stored in the storage unit 15 by reading a recording medium 1A such as a memory card with a recording medium reader (not illustrated), as discussed in the seventh embodiment. Alternatively, the program may be downloaded from another computer (not illustrated) connected via the communication network N.

The cellular phone 1 illustrated in FIG. 39 downloads the program for, e.g., selecting the area 3 and calculating transit time from the recording medium 1A or from the other computer (not illustrated) via the communicator 16. The program is installed as the control program 15P in the storage unit 15 and is loaded into the RAM 12 to be executed. Thus, the above-discussed cellular phone 1 operates.

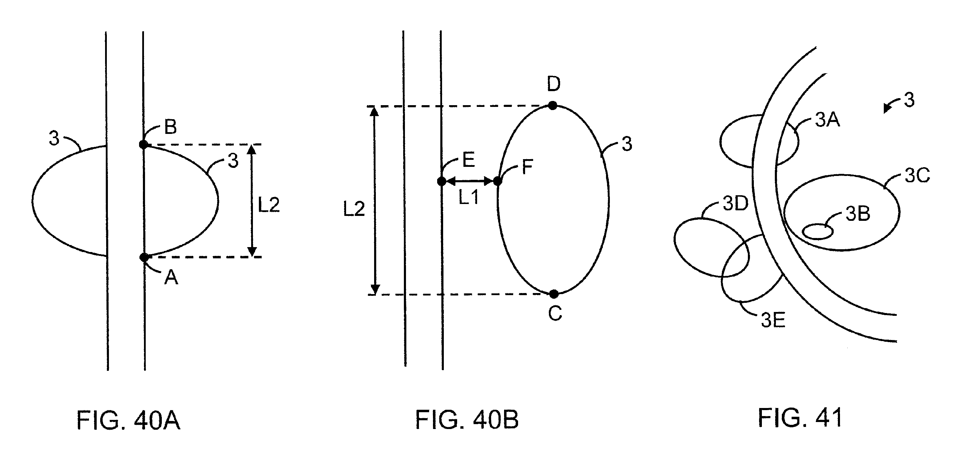

FIGs. 40A and 40B are diagrams each illustrating another situation of an area. Another situation of an area 3 adjacent to or neighboring a road on the route will next be discussed. The shape of the area 3 is not limited to a rectangle, as discussed above, and the area 3 may be formed by curves or a combination of curves and straight lines. FIG. 40A illustrates an area 3 that intersects a road, and FIG. 40B illustrates an area 3 that is neighboring a road or lies apart from the road within a given distance. As illustrated in FIG. 40A, the span L2 of the area 3 intersecting the road may be, for example, a length between two points A and B at which the road and the periphery of the area 3 intersect each other.

On the other hand, as illustrated in FIG. 40B, the span L2 of the area 3 at a distance L1 from the road may be, for example, the longest length between two points D and C, out of sets of two points at which the road and the periphery of the area 3 intersect each other when the road is moved in parallel toward the area 3. The distance from the road may be calculated as, for example, the shortest length between two points E and F, out of line segments formed by any points on the periphery of the area 3 and points at which perpendicular lines extending from the any points toward the road intersect the road.

FIG. 41 is a diagram illustrating other situations of areas. Other situations of areas 3 adjacent to a road on the route, neighboring the road, or lying apart from the road within a given distance will next be discussed. The road is not limited to a straight line, as discussed above, and may be a curve, as illustrated in FIG. 41. All the areas 3A to 3E illustrated in FIG. 41 are the areas 3 neighboring the road on the route or lying apart form the road within a given distance. Some areas 3 may lie alone like the area 3A, and some areas 3 may partially overlap with each other like the areas 3E and 3D. Moreover, some areas 3 may be included in another area 3 like the areas 3C and 3B.

The seventh embodiment is as discussed above. Since the other parts of the seventh embodiment are similar to the first to sixth embodiments, like reference numerals are assigned to like components, and the detailed discussion is omitted here.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a illustrating of the superiority and inferiority of the invention. Although the embodiments of the present invention have been described in detail, it should be understood that the various changes, substitutions, and alterations could be made hereto without departing from the spirit and scope of the invention.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A device for selecting an area to be introduced, from among a plurality of areas, the area being introduced to a user moving along a given route, the device comprising:
a candidate selector for selecting a candidate area for an area to be introduced, the candidate area being adjacent to or neighboring a road on the given route;
a time estimator for estimating a transit time for transiting the candidate area; and
an area determiner for determining the candidate area as an area to be introduced, in accordance with the transit time and a given reference time.

2. The device according to claim 1, wherein
the time estimator estimates the transit time by dividing a span of the road involved with the candidate area by a transit speed for the road.

3. The device according to claim 1 or 2, further comprising:
a movement speed detector for detecting a movement speed of the user; and
a transit speed calculator for calculating the transit speed in accordance with an average value of the movement speeds during a given time period, the movement speeds being detected at given timings.

4. The device according to claim 3, wherein the transit speed calculator calculates the transit speed also in accordance with an attribute of the road, the attribute including a type of the road.

5. The device according to any of claims 1 - 4,
the candidate selector including
an auxiliary candidate selector for selecting an auxiliary candidate area, a part of which lying apart from a road on the given route within a given distance,
the device further comprising:
an auxiliary time estimator for estimating a transit time for transiting the auxiliary candidate area; and
an auxiliary area determiner for determining the auxiliary candidate area as an area to be introduced, in accordance with the transit time estimated by the auxiliary time estimator and a given auxiliary reference time.

6. The device according to claim 5, wherein
the auxiliary time estimator estimates the transit time for transiting the auxiliary candidate area by dividing a span of a back road involved with the auxiliary candidate area by a transit speed for the back road.

7. The device according to any of claims 1 - 6,
the area determiner determines the candidate area as an area to be introduced, when the transit time falls within the given reference time.

8. The device according to claim 5 or 6, or claim 7 when read as appended to claim 5 or 6,
the auxiliary area determiner determines the auxiliary candidate area as an area to be introduced, when the transit time estimated by the auxiliary time estimator falls within a given auxiliary reference time.

9. The device according to any of claims 1 - 8, further comprising:
a rating value receiver for receiving a rating value of the candidate area,
wherein
the area determiner determines the candidate area as an area to be introduced, also in accordance with the rating value.

10. The device according to claim 5, 6, or 8, or claim 9 when read as appended to claim 5, 6 or 8, further comprising:
a rating value receiver for receiving a rating value of the auxiliary candidate area,
wherein
the auxiliary area determiner determines the auxiliary candidate area as an area to be introduced, also in accordance with the rating value.

11. The device according to any of claims 5, 6, 8, and 10, further comprising:
a distance storage for storing distance data in association with each transit speed;
a distance reader for reading from the distance storage the distance data associated with a value of a transit speed for the back road; and
an area canceller for cancelling the area to be introduced, when a distance between the area to be introduced and the road on the given route exceeds a read distance.

12. The device according to any of claims 1 - 11, further comprising:
a reference time storage for storing a reference time for each time range; and
a clock for outputting time data of current time,
wherein
the area determiner determines the candidate area as an area to be introduced, in accordance with the transit time estimated by the time estimator and a reference time read from the reference time storage in accordance with the time data output from the clock.

13. The device according to any of claims 5, 6, 8, 10, and 11, or claim 12 when read as appended to claim 5, 6, 8, 10 or 11, further comprising:
a reference time storage for storing an auxiliary reference time for each time range; and
a clock for outputting time data of current time,
wherein
the auxiliary area determiner determines the auxiliary candidate area as an area to be introduced, in accordance with the transit time estimated by the auxiliary time estimator and an auxiliary reference time read from the reference time storage in accordance with the time data output from the clock.

14. A method executed by a device for selecting an area to be introduced, from among a plurality of areas, the area being introduced to a user moving along a given route, the method comprising:
selecting a candidate area for an area to be introduced, the candidate area
being adjacent to or neighboring a road on the given route;
estimating a transit time for transiting the candidate area; and
determining the candidate area as an area to be introduced, in accordance with the transit time and a given reference time.

15. A program comprising computer-executable instructions enabling a computer to execute a method for selecting an area to be introduced, from among a plurality of areas, the area being introduced to a user moving along a given route, the method including:
selecting a candidate area for an area to be introduced, the candidate area being adjacent to or neighboring a road on the given route,
estimating a transit time for transiting the candidate area, and
determining the candidate area as an area to be introduced, in accordance with the transit time and a given reference time.
